(19) Europäisches Patentamt
European Patent Office
Office européen des brevets

(11) **EP 4 776 533 A1**

(12) **EUROPEAN PATENT APPLICATION**
published in accordance with Art. 153(4) EPC

(43) Date of publication:
**15.07.2026  Bulletin 2026/29**

(21) Application number: **23951098.5**

(22) Date of filing: **04.09.2023**

(51) International Patent Classification (IPC):
**H04B 17/309** *(2015.01)*

(52) Cooperative Patent Classification (CPC):
**H04B 17/309**

(86) International application number:
**PCT/CN2023/116858**

(87) International publication number:
**WO 2025/050269 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHAO, Qun
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **INFORMATION DETERMINATION METHOD, DEVICE AND STORAGE MEDIUM**

(57) The present disclosure relates to an information determination method, a device and a storage medium. The method comprises: sending first information, the first information being used for indicating the intensity of a near-field effect on a terminal device, the near-field effect being a near-field effect on the terminal device relative to a first antenna array, and the first antenna array being an antenna array for a network device to transmit a wireless signal to the terminal device. In this way, the intensity of the near-field effect on the terminal device can be determined by means of the first information.

S3301, sending first information

FIG. 3C

EP 4 776 533 A1

**Description**

**TECHNICAL FIELD**

The disclosure relates to the field of communication technologies, and particularly to an information determination method, a device, and a storage medium.

**BACKGROUND**

In a wireless communication system, application of multi-antenna technology based on multiple input multiple output (MIMO) and high-frequency spectrum resources may improve a communication transmission rate.

SUMMARY

Embodiments of the disclosure provide an information determination method, a device, and a storage medium.

According to a first aspect of embodiments of the disclosure, an information determination method is provided. The method includes: sending first information, in which the first information indicates a strength of a near field effect on a terminal, the near field effect is a near field effect of the terminal relative to a first antenna array, and the first antenna array is an antenna array used by a network device to transmit a wireless signal to the terminal.

According to a second aspect of embodiments of the disclosure, an information determination method is provided. The method includes: receiving first information, in which the first information indicates a strength of a near field effect on a terminal, the near field effect is a near field effect of the terminal relative to a first antenna array, and the first antenna array is an antenna array used by a network device to transmit a wireless signal to the terminal.

According to a second aspect of embodiments of the disclosure, an information determination method is provided. The method includes: sending, by a terminal, first information to a network device, in which the first information indicates a strength of a near field effect on a terminal, the near field effect is a near field effect of the terminal relative to a first antenna array, and the first antenna array is an antenna array used by a network device to transmit a wireless signal to the terminal.

According to a fourth aspect of embodiments of the disclosure, a terminal is provided. The terminal includes: a transceiver module, configured to send first information, in which the first information indicates a strength of a near field effect on the terminal, the near field effect is a near field effect of the terminal relative to a first antenna array, and the first antenna array is an antenna array used by a network device to transmit a wireless signal to the terminal.

According to a fifth aspect of embodiments of the disclosure, a network device is provided. The network device includes: a transceiver module, configured to receive first information, in which the first information indicates a strength of a near field effect on a terminal, the near field effect is a near field effect of the terminal relative to a first antenna array, and the first antenna array is an antenna array used by the network device to transmit a wireless signal to the terminal.

According to a sixth aspect of embodiments of the disclosure, a communication device is provided. The communication device includes: one or more processors, in which the terminal is configured to perform the method as described in optional implementations of the first aspect or the second aspect.

According to a seventh aspect of embodiments of the disclosure, a storage medium is provided. The storage medium stores instructions that, when executed on a communication device, cause the communication device to perform the method as described in optional implementations of the first aspect or the second aspect.

According to an eighth aspect of embodiments of the disclosure, a communication system is provided. The communication system includes a terminal and a network device. The terminal is configured to execute the method as described in optional implementations of the first aspect, and the network device is configured to execute the method as described in optional implementations of the second aspect.

The technical solutions provided in embodiments of the present disclosure may include the following beneficial effect. The first information is sent. The first information indicates the strength of the near field effect on the terminal, the near field effect is the near field effect of the terminal relative to the first antenna array, and the first antenna array is the antenna array used by the network device to transmit the wireless signal to the terminal. In this way, the strength of the near field effect on the terminal may be determined based on the first information.

It is noted that the foregoing general description and the following detailed description are illustrative and explanatory only and do not limit the present disclosure.

**BRIEF DESCRIPTION OF THE DRAWINGS**

In order to more clearly illustrate the technical solutions in embodiments of the present disclosure, the accompanying drawings required for describing embodiments are introduced below. The following accompanying drawings are merely some embodiments of the present disclosure and do not specifically limit the scope of protection of the present disclosure.

FIG. 1A is a schematic diagram illustrating an architecture of a communication system according to an embodiment of the disclosure.
FIG. 1B is a schematic diagram illustrating a near field region and a far field region of an antenna array according to an embodiment of the disclosure.

FIG. 1C is a schematic diagram illustrating a terminal receiving an electromagnetic wave in a far field region according to an embodiment of the disclosure.

FIG. 1D is a schematic diagram illustrating a terminal receiving an electromagnetic wave in a near field region according to an embodiment of the disclosure.

FIG. 2 is a flowchart illustrating an information determination method according to an embodiment of the disclosure.

FIG. 3A is a flowchart illustrating an information determination method according to an embodiment of the disclosure.

FIG. 3B is a flowchart illustrating an information determination method according to an embodiment of the disclosure.

FIG. 3C is a flowchart illustrating an information determination method according to an embodiment of the disclosure.

FIG. 4A is a flowchart illustrating an information determination method according to an embodiment of the disclosure.

FIG. 4B is a flowchart illustrating an information determination method according to an embodiment of the disclosure.

FIG. 4C is a flowchart illustrating an information determination method according to an embodiment of the disclosure.

FIG. 4D is a flowchart illustrating an information determination method according to an embodiment of the disclosure.

FIG. 5 is a flowchart illustrating an information determination method according to an embodiment of the disclosure.

FIG. 6 is a flowchart illustrating an information determination method according to an embodiment of the disclosure.

FIG. 7A is a block diagram illustrating a terminal according to an embodiment of the disclosure.

FIG. 7B is a block diagram illustrating a network device according to an embodiment of the disclosure.

FIG. 8A is a block diagram illustrating a communication device according to an embodiment of the disclosure.

FIG. 8B is a block diagram illustrating a chip according to an embodiment of the disclosure.

DETAILED DESCRIPTION

Embodiments of the disclosure provide an information determination method, a device, and a storage medium.

In a first aspect, embodiments of the disclosure provide an information determination method. The method includes: sending first information, in which the first information indicates a strength of a near field effect on a terminal, the near field effect is a near field effect of the terminal relative to a first antenna array, and the first antenna array is an antenna array used by a network device to transmit a wireless signal to the terminal.

In the above embodiment, the strength of the near field effect on the terminal may be determined based on the first information.

In combination with some embodiments of the first aspect, in some embodiments, the method further includes: performing channel estimation according to a received reference signal to obtain a first matrix; and determining the first information according to the first matrix.

In the above embodiment, the first information may be determined based on the channel estimation, that is, the strength of the near field effect on the terminal may be determined based on the channel estimation.

In combination with some embodiments of the first aspect, in some embodiments, the first antenna array is a one-dimension uniform array, the first matrix includes at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

In an example, the one-dimension uniform array may be a uniform linear array (ULA), or may also be a cross polarization array (CPA).

In the above embodiment, for the one-dimension uniform array, the first information may be determined according to the first channel matrix.

In combination with some embodiments of the first aspect, in some embodiments, each of the at least one first channel matrix is a $N_r \times N_t$ matrix, where $N_t$ is a numerical count of antenna ports of the first antenna array in one polarization direction, and $N_r$ is a numerical count of antennas of the second antenna array.

In the above embodiment, for the one-dimension uniform array, the first channel matrix may be determined based on specifications of the first antenna array and the second antenna array.

In combination with some embodiments of the first aspect, in some embodiments, the first antenna array is a two-dimension uniform array, the first matrix includes at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

In an example, the two-dimension uniform array may be a uniform planar array (UPA).

In the above embodiment, for the two-dimension uniform array, the first information may be determined according to the at least one second channel matrix and the at least one third channel matrix.

In combination with some embodiments of the first aspect, in some embodiments, each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and/or each of the at least one third channel matrix is a $N_r \times N_t^{(h)}$ matrix, where $N_t^{(h)}$ is a numerical count of antenna ports of the first antenna array in one polarization direction in a horizontal dimension.

In the above embodiment, for the two-dimension uniform array, the first channel matrix may be determined based on specifications of the first antenna array and the second antenna array.

In combination with some embodiments of the first aspect, in some embodiments, determining the first information according to the first matrix includes: determining first dimension information according to the at least one second channel matrix; determining second dimension information according to the at least one third channel matrix; and determining the first information according to the first dimension information and the second dimension information.

In the above embodiment, the first information may be determined based on information of two dimensions of the UPA.

In combination with some embodiments of the first aspect, in some embodiments, determining the first information according to the first dimension information and the second dimension information includes any one of: determining the first dimension information and the second dimension information as the first information; determining an average value of the first dimension information and the second dimension information as the first information; determining a maximum value among the first dimension information and the second dimension information as the first information; or determining a minimum value among the first dimension information and the second dimension information as the first information.

In the above embodiment, the first information may be determined based on information of two dimensions of the UPA.

In combination with some embodiments of the first aspect, in some embodiments, the instance is any one of:

at least one orthogonal frequency division multiplexing (OFDM) subcarrier;
at least one OFDM symbol;
at least one resource element (RE);
at least one channel state information reference signal (CSI-RS) resource; or
at least one CSI-RS resource set.

In the above embodiments, the first matrix may be determined based on any one of the above instances.

In combination with some embodiments of the first aspect, in some embodiments, determining the first information according to the first matrix includes: determining a second matrix according to the first matrix, in which the second matrix is a covariance matrix of the first matrix; and determining the first information according to the second matrix.

In the above embodiments, the first information may be determined based on the covariance matrix.

In combination with some embodiments of the first aspect, in some embodiments, determining the second matrix according to the first matrix includes:

determining the second matrix according to an expression $C = \sum_k \sum_p H_p^H(k) H_p(k)$;
where C denotes the second matrix, $H_p(k)$ denotes the first matrix, $H_p^H(k)$ denotes conjugate transposition for the first matrix, p represents a serial number of a polarization direction of the first antenna array, and k represents a serial number of an instance of a downlink channel.

In the above embodiments, the covariance matrix of a downlink channel matrix may be calculated.

In combination with some embodiments of the first aspect, in some embodiments, determining the first information according to the second matrix includes: performing eigenvalue decomposition on the second matrix to obtain a third matrix, in which the third matrix is a standard orthonormal basis of a signal subspace; obtaining a first eigenvalue and a second eigenvalue according to the third matrix, in which the first eigenvalue is a maximum eigenvalue of a fourth matrix, the second eigenvalue is a second maximum eigenvalue of the fourth matrix, and the fourth matrix is a matrix calculated according to the third matrix; and determining the first information according to the first eigenvalue and the second eigenvalue.

In the above embodiment, the standard orthonormal basis of the signal subspace may be obtained by performing the eigenvalue decomposition on the covariance matrix, and the first information may be obtained.

In combination with some embodiments of the first aspect, in some embodiments, determining the first information according to the first eigenvalue and the second eigenvalue includes: determining a ratio of a modulus of the second eigenvalue to a modulus of the first eigenvalue as the first information.

In the above embodiment, the first information may be determined based on the maximum eigenvalue and the second greatest eigenvalue.

In combination with some embodiments of the first aspect, in some embodiments, the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

In the above embodiments, the strength of the near field effects may be characterized by the wavefront curvature indicator information.

In combination with some embodiments of the first aspect, in some embodiments, the first information is carried via channel state information (CSI).

In the above embodiment, the first information may be reported via the CSI.

In a second aspect, embodiments of the disclosure provide an information determination method. The method includes: receiving first information, in which the first information indicates a strength of a near field effect on a terminal, the near field effect is a near field effect of the terminal relative to a first antenna array, and the first antenna array is an antenna array used by a network device to transmit a wireless signal to the terminal.

In the above embodiment, the strength of the near field effect on the terminal may be determined based on the first information.

In combination with some embodiments of the second aspect, in some embodiments, the method further includes: determining the strength of the near field effect on the terminal according to the first information.

In the above embodiments, the network device may determine the strength of the near field effect of the terminal.

In combination with some embodiments of the second aspect, in some embodiments, the method further includes: determining second information according to the first information, wherein the second information is a wireless transmission parameter configured by the network device for the terminal.

In the above embodiments, the network device may adapt the terminal based on the first information, configure the wireless transmission parameter for the terminal, which may improve transmission efficiency and reliability.

In combination with some embodiments of the second aspect, in some embodiments, the second information includes at least one of: a codebook parameter, in which the codebook parameter indicates a codebook used by the terminal; or a numerical count of candidate beams.

In the above embodiments, the network device may adapt the terminal based on the first information, configure the codebook parameter and/or the numerical count of candidate beams for the terminal, which may improve transmission efficiency and reliability.

In combination with some embodiments of the second aspect, in some embodiments, the first information is information determined by the terminal based on a first matrix, and the first matrix is a matrix obtained by performing by the terminal device channel estimation according to a received reference signal.

In combination with some embodiments of the second aspect, in some embodiments, the first antenna array is a one-dimension uniform array, the first matrix includes at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

In combination with some embodiments of the second aspect, in some embodiments, each of the at least one first channel matrix is a $N_r \times Nt$ matrix, where $Nt$ is a numerical count of antenna ports of the first antenna array in one polarization direction, and $N_r$ is a numerical count of antennas of the second antenna array.

In combination with some embodiments of the second aspect, in some embodiments, the first antenna array is a two-dimension uniform array, the first matrix includes at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

In combination with some embodiments of the second aspect, in some embodiments, each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and/or each of the at least one third channel matrix is a $N_r \times N_t^{(h)}$ matrix, where $N_t^{(h)}$ is a numerical count of antenna ports of the first antenna array in one polarization direction in a horizontal dimension.

In combination with some embodiments of the second aspect, in some embodiments, the first information is information determined according to first dimension information and second dimension information, the first dimension information is information determined according to the at least one second channel matrix, and the second dimensional information is information determined according to the at least one third channel matrix.

In combination with some embodiments of the second aspect, in some embodiments, the first information includes any one of:

the first dimension information and the second dimension information;

an average value of the first dimension information and the second dimension information;

a maximum value among the first dimension information and the second dimension information; or

a minimum value among the first dimension information and the second dimension information.

In combination with some embodiments of the second aspect, in some embodiments, the instance is any one of:

at least one OFDM subcarrier;

at least one OFDM symbol;

at least one RE;

at least one CSI-RS resource; or

at least one CSI-RS resource set.

In combination with some embodiments of the second aspect, in some embodiments, the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

In combination with some embodiments of the second aspect, in some embodiments, the first information is carried via CSI.

In a third aspect, embodiments of the disclosure provide an information determination method. The method includes: sending, by a terminal, first information to a network device, in which the first information indicates a strength of a near field effect on the terminal, the near field effect is a near field effect of the terminal relative to a first antenna array, and the first antenna array is an antenna array used by the network device to transmit a wireless signal to the terminal.

In the above embodiment, the strength of the near field effect on the terminal may be determined based on the first information.

In a fourth aspect, embodiments of the disclosure provide a terminal. The terminal includes:

In a fourth aspect, embodiments of the disclosure provide a terminal. The terminal includes at least one of a transceiver module or a processing module, in which the terminal is configured to perform optional implementations of the first aspect.

In a fifth aspect, embodiments of the disclosure provide a network device. The network device includes at least one of a transceiver module or a processing module, in which the network device is configured to perform optional implementations of the second aspect.

In a sixth aspect, embodiments of the disclosure provide a communication device. The communication device includes: one or more processors, in which the communication device is configured to perform optional implementations of the first aspect or optional implementations of the second aspect.

In a seventh aspect, embodiments of the disclosure provide a storage medium. The storage medium stores instructions which, when executed on a communication device, cause the communication device to perform the method described in optional implementations of the first aspect or the method described in optional implementations of the second aspect.

In an eighth aspect, embodiments of the disclosure provide a communication system. The communication system includes: a terminal, configured to perform the method described in optional implementations of the first aspect, and a network device, configured to perform the method described in optional implementations of the second aspect.

In a ninth aspect, embodiments of the disclosure provide a program product. The program product, when executed by a communication device, causes the communication device to perform the method described in optional implementations of the first aspect or the method described in optional implementations of the second aspect.

In a tenth aspect, embodiments of the disclosure provide a computer program. When the computer program is running on a computer, the computer is caused to perform the method described in optional implementations of the first aspect or the method described in optional implementations of the second aspect.

In an eleventh aspect, embodiments of the disclosure provide a chip or a chip system. The chip or chip system includes a processing circuit, configured to perform the method described in optional implementations of the first aspect or the method described in optional implementations of the second aspect.

It may be understood that the terminal, the network device, the communication device, the communication system, the storage medium, the program product, the computer program and the chip or the chip system are all used to implement the method in embodiments of the disclosure. Thus, regarding beneficial effects they may achieve, reference may made be to the beneficial effects in the corresponding methods, which is not repeated herein.

Embodiments of the disclosure provide an information determination method, a device, and a storage medium. In some embodiments, terms such as "information determination method", "information processing method", and "communication method" may be used interchangeably, terms such as "information determination apparatus", "information processing apparatus", and "communication apparatus", and "communication device" may be used interchangeably, and terms such as "information processing system", and "communication system" may be used interchangeably.

Embodiments of the disclosure are not exhaustive, but are only illustrative, and are not intended to be a specific limitation on the protection scope of the disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. In addition, respective embodiments may be arbitrarily combined, for example, part of or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions between the embodiments are consistent and may be referred to each other, and the technical features in different embodiments may be combined to form a new embodiment based on their internal logical relationships.

The terms used in embodiments of the disclosure are only for the purpose of describing specific embodiments and are not intended to limit the disclosure.

In embodiments of the disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun following the article may be understood as a singular expression or a plural expression.

In embodiments of the disclosure, "a plurality of" refers to two or more.

In some embodiments, the terms "at least one of", "one or more", "a plurality of", "multiple" etc. may be used interchangeably.

In embodiments of the disclosure, descriptions such as "at least one of A, B, C..." and "A and/or B and/or C..." include the case where any one of A, B, C... exists alone, and also include the case of any combination of any plurality of items in A, B, C..., and each case may exist independently. For example, "at least one of A, B, and C" includes the case of A alone, B alone, C alone, the combination of A and B, the combination of A and C, the combination of B and C, and the combination of A, B, and C. For example, "A and/or B" includes the case of A alone, B alone, and the combination of A and B.

In some embodiments, expressions such as "in one case A, in another case B" and "in response to one case A, in response to another case B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

The prefixes such as "first" and "second" in embodiments of the disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, a number of descriptive objects is not limited by the ordinal number, and may be one or more. Taking the "first apparatus" as an example, a number of "apparatuses" may be one or more. In addition, the objects modified by different prefixes may be the same or different. For example, if the descriptive object is "an apparatus", then the "first apparatus" and the "second apparatus" may be the same apparatus or different apparatuses, and their types may be the same or different. For another example, if the descriptive object is "information", then the "first information" and the "second information" may be the same information or different information, and their contents may be the same or different.

In some embodiments, "comprising A", "including A", "used to indicate A", and "carrying A" may be interpreted as directly carrying A or indirectly indicating A.

In some embodiments, the terms such as "in response to...", "in response to determining...", "in a case of/that...", "upon", "when...", "if...", "in case of/that...", etc. may be used interchangeably.

In some embodiments, the terms such as "greater than", "greater than or equal to", "not smaller than", "more than", "more than or equal to", "not less than", "higher than", "higher than or equal to", "not lower than", and "above" may be used interchangeably, and the terms such as "smaller than", "smaller than or equal to", "not greater than", "less than", "less than or equal to", "no more than", "lower than", "lower than or equal to", "not higher than", and "below" may be replaced with each other.

In some embodiments, the apparatus, etc. may be interpreted as physical or virtual, and their names are not limited to the names recorded in the embodiments. The terms such as "apparatus", "equipment", "device", "circuit", "network element", "node", "function", "unit", "section", "system", "network", "chip", "chip system", "entity", and "subject" may be used interchangeably.

In some embodiments, the term such as "network" may be interpreted as an apparatus (e.g., a network device, an access network device, a core network device, etc.) included in the network.

In some embodiments, the network device may include at least one of the access network device or the core network device.

In some embodiments, the terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "carrier", "component carrier", "BWP" and the like may be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like may be used interchangeably.

In some embodiments, the access network device, the core network device, or the network device may be replaced by the terminal. For example, various embodiments of the disclosure may also be applied to a structure in which communication between the access network device, the core network device, or the network device and the terminal is replaced by communication between multiple terminals (for example, device-to-device (D2D), vehicle-to-everything (V2X), etc.). In this case, the terminal may be set to have a structure that has all or part of functions of the access network device. In addition, the language such as "uplink" and "downlink" may also be replaced by the language corresponding to the communication between the terminals (for example, "side"). For example, "uplink channel", "downlink channel", etc. may be replaced by "side channel", and "uplink", "downlink", etc. may be replaced by "sidelink".

In some embodiments, the terminal may be replaced by the access network device, the core network device, or the network device. In this case, the access network device, the core network device, or the network device may also be configured to have a structure that has all or part of functions of the terminal.

In some embodiments, acquisition of data, information, etc. may comply with laws and regulations of the country to which the data is obtained.

In some embodiments, data, information, etc. may be obtained with consent from users.

In addition, each element, each row, or each column in the table of embodiments of the disclosure may be implemented as an independent embodiment, and a combination of any elements, any rows, or any columns may also be implemented as an independent embodiment.

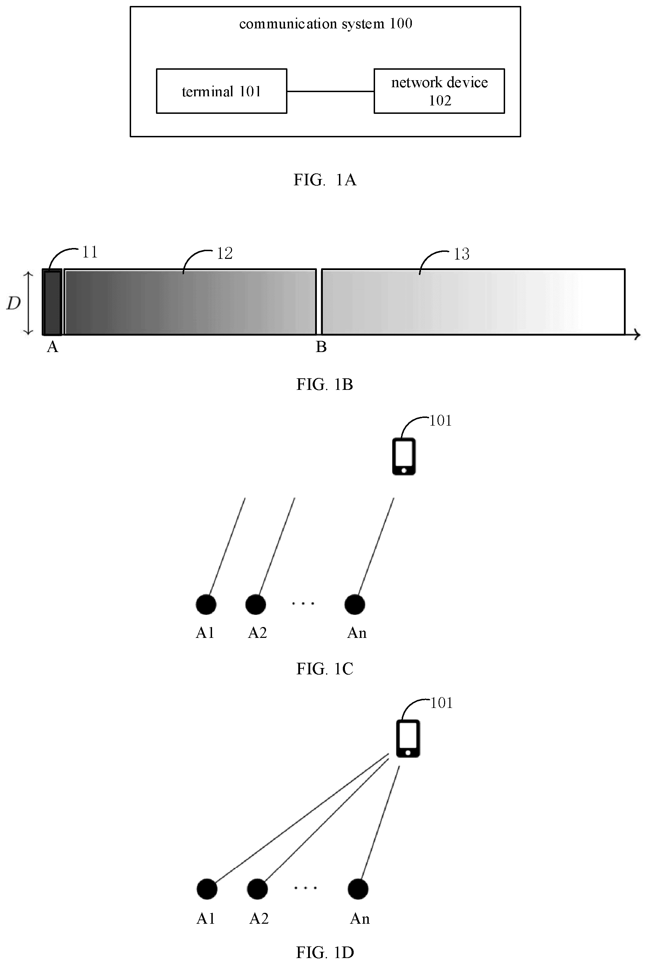

FIG. 1A is a schematic diagram illustrating an architecture of a communication system according to an embodiment of the disclosure. As shown in FIG. 1A, a communication system 100 includes a terminal 101 and a network device 102.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited herein.

In some embodiments, the network device includes at least one of: the access network device, or the core network device.

In some embodiments, the access network device may be, for example, a node or device that accesses a terminal to a wireless network. The access network device may include at least one of an evolved NodeB (eNB), a next generation eNB (ng-eNB), a next generation NodeB (gNB) in a 5G communication system, a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (Wi-Fi) system, but is not limited herein.

In some embodiments, the technical solution of the disclosure may be applicable to an Open RAN architecture. In this case, the interfaces between or within the access network devices involved in embodiments of the disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but is not limited herein.

In some embodiments, the core network device may be a device, or may be a plurality of devices or device groups. The core network may include, for example, at least one of an evolved packet core (EPC), a 5G core network (5GCN), or a next generation core (NGC).

It may be understood that the communication system described in embodiments of the disclosure aims to more clearly illustrate the technical solutions of embodiments of the disclosure, and does not constitute a limitation on the technical solutions provided in embodiments of the disclosure. A person skilled in the art may know that with the evolution of the system architecture and the emergence of new service scenarios, the technical solution provided in embodiments of the disclosure are also applicable to similar technical problems.

The following embodiments of the disclosure may be applied to the communication system 100 or part of the subjects shown in FIG. 1A, but are not limited herein. The subjects shown in FIG. 1A are examples, and the communication system may include all or part of the subjects in FIG. 1A, or may include other subjects than those shown in FIG. 1A. The number and the form of the subjects are arbitrary. The subjects may be physical or virtual. The connection relationships between the subjects are examples. The subjects may be connected or disconnected, and the connection may be in any manner, which may be a direct connection or an indirect connection, or may be a wired connection or a wireless connection.

Embodiments of the disclosure may be applied to long term evolution (LTE), LTE-advanced (LTE-A), LTE-beyond (LTE-B), SUPER 3G, IMT-Advanced, a 4th generation mobile communication system (4G), a 5th generation mobile communication system (5G), 5G new radio (NR), future radio access (FRA), new radio access technology (RAT), new radio (NR), new radio access (NX), future generation radio access (FX), a global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a public land mobile network (PLMN) network, a device-to-device (D2D) system, a machine-to-machine (M2M) system, an internet of things (IoT) system, vehicle-to-everything (V2X), systems using other communication methods, and next-generation systems based on them. In addition, the plurality of systems may also be combined (for example, a combination of LTE or LTE-A and 5G, etc.) for application.

In some embodiments, the network device 102 in the communication system 100 may include a first antenna array, and the terminal may include a second antenna array. The network device may send a downlink signal to the terminal via the first antenna array, and may also receive an uplink signal sent by the terminal via the first antenna array. Similarly, the terminal may send an uplink signal to the network device via the second antenna array, and may also receive a downlink signal sent by the network device via the second antenna array. In an example, the first antenna array may be an antenna array supporting multiple input multiple output (MIMO) technology, such as a large-scale antenna array or an ultra-large-scale antenna array.

In a wireless communication system, in order to increase a transmission rate, multi-antenna technology based on multiple input multiple output (MIMO) and technology using high-frequency spectrum resources for high-frequency transmission have been increasingly applied.

In some embodiments of the disclosure, in order to meet a demand for ever-increasing data rates, the communication system may perform uplink and downlink transmission by employing high-frequency spectrum resources, such as millimeter wave bands, terahertz bands, and the like. High-frequency transmission suffers from greater transmission attenuation, especially severe absorption by water molecules and oxygen in the air, resulting in a very limited transmission distance and a very limited coverage range. On one hand, higher frequency implies a shorter wavelength. Compared with mid-to-low frequency spectrum, more antennas, such as large-scale antennas or ultra-large-scale antennas, may be deployed under the same aperture size. On the other hand, the large-scale antenna may provide a larger beamforming gain, effectively compensating for severe transmission loss, thus extending the coverage range and the transmission distance. Thus, high-frequency transmission and large-scale antenna technology are complementary technologies. The combination of the two may be one of the most promising technologies in new-generation wireless communication.

Multi-antenna technology, i.e., the MIMO technology, is highly sensitive to channel state information (CSI), especially spatial-domain CSI. If the spatial-domain CSI is inaccurate, performance of a MIMO link is degraded significantly. In an example, in a frequency division duplex (FDD) system, for the network device (for example, an access network device) to obtain accurate spatial-domain CSI, the terminal needs to feed back the spatial-domain CSI obtained by measuring a channel state information reference signal (CSI-RS) to the network device. In order to accurately represent the spatial-domain CSI, a codebook may be used to quantize and represent the spatial-domain CSI.

It should be noted that high-frequency massive MIMO may lead to hardening of wireless channels, which are mainly based on line-of-sight (LoS) propagation.

FIG. 1B is a schematic diagram illustrating a near field region and a far field region of an antenna array according to an embodiment of the disclosure. As shown in FIG. 1B, for a first antenna array 11 (its antenna aperture is denoted as D), its electromagnetic (EM) field may be divided into a near field region 12 and a far field region 13. A location where the first antenna array is a point A, a boundary between the near field region 12 and the far field region 13 is a point B, and a distance between the point A and the point B may be referred to as a Rayleigh distance.

An expression for the Rayleigh distance satisfies the following relationship: $R = (2 * D^2)/\lambda$.

In this expression, R represents the Rayleigh distance (i.e., the distance between the point A and the point B), D represents an effective aperture of the first antenna array, and $\lambda$ represents a wavelength of an electromagnetic wave transmitted by the first antenna array.

Based on the above expression, it may be known that a range of the near field may be determined based on the effective aperture of the array and the wavelength. In an existing cellular wireless communication system, terminals are mostly located in the far field of the first antenna array of the network device. If a carrier frequency becomes higher (i.e., the wavelength of the electromagnetic wave becomes smaller), and/or the effective aperture of the antenna array becomes larger, the range of the near field region may expand. Even if an existing network topology (for example, a distance between access network devices and locations of the access network devices, a location distribution of terminals, etc.) remains unchanged, a terminal located in the far field region at a low frequency may also be located in the near field region at a high frequency, i.e., a far field UE at the low frequency is likely to become a near field UE at the high frequency.

In some embodiments, electromagnetic waves received by the terminal in the near field region and the far field region are different.

FIG. 1C is a schematic diagram illustrating a terminal receiving an electromagnetic wave in a far field region according to an embodiment of the disclosure. As shown in FIG. 1C, the first antenna array may include at least one antenna port, for example, a plurality of antenna ports A1, A2, ..., An in FIG. 1C. A terminal 101 may be in the far field region of the first antenna array, and a beam received by the terminal 101 may be a two-dimensional (2 dimension, 2D) directional beam. For example, in the far field region, an electromagnetic wave received by the terminal 101 (i.e., an electromagnetic wave transmitted by a first antenna array) may be a plane wave, and a beam for the terminal may be a two-dimensional (2 dimension, 2D) directional beam pointing to the terminal.

For any path in multipath propagation, a time and a phase of arrival at a receiving antenna array (for example, a second antenna array) of the terminal are equally spaced.

FIG. 1D is a schematic diagram illustrating a terminal receiving an electromagnetic wave in a near field region according to an embodiment of the disclosure. As shown in FIG. 1D, the first antenna array may similarly include at least one antenna port, for example, a plurality of antenna ports A1, A2, ..., An in FIG. 1D. A terminal 101 may be in the near field region of the first antenna array, and a beam received by the terminal 101 may be a three-dimensional (3-dimension, 3D) beam. For example, in the near field region, an electromagnetic wave received by the terminal 101 (i.e., an electromagnetic wave transmitted by a first antenna array) may be a spherical wave, and a beam for the terminal may be a three-dimensional beam pointing to the terminal. For any path in multipath propagation, a time and a phase of arrival at a receiving antenna array (for example, a second antenna array) of the terminal may no longer be equally spaced.

The electromagnetic waves received by the terminal in the near field region and the far field region have the above-mentioned differences. A communication parameter for the far field region may cause performance degradation when used in the near field region. In order to improve the communication performance, different communication parameters may be used for the near field region and the far field region. The communication parameter may include at least one of parameters such as a codebook type and a numerical count of beams. For example, a separate codebook type or a larger numerical count of candidate beams may be configured for the near field region.

However, in the related art, the network device cannot determine whether a region where the terminal is located is the near field region or a far field region, and is even less able to determine a strength of a near field effect on the terminal.

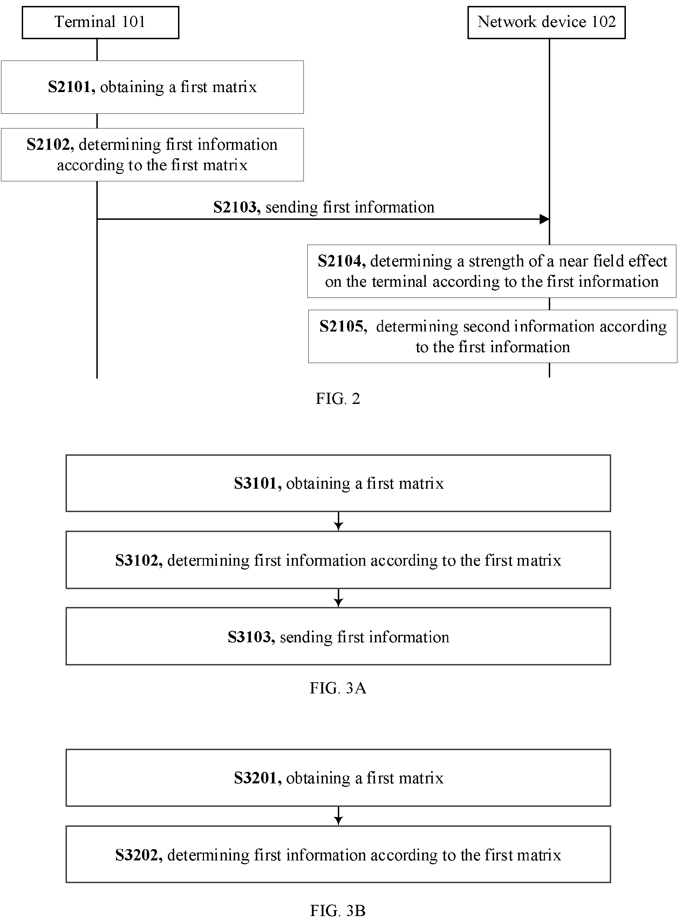

FIG. 2 is a flowchart illustrating an information determination method according to an embodiment of the disclosure. The method may be performed by the above communication system. As shown in FIG. 2, the method may include the following steps.

At step 2101, a terminal obtains a first matrix.

In some embodiments, the termina may perform channel estimation according to a received reference signal to obtain the first matrix.

In an example, the reference signal may include at least one of a channel state information reference signal (CSI-RS) or other signals sent by the network device to the terminal.

In some embodiments, the first antenna array is a one-dimension uniform array, the first matrix may include at least one first channel matrix, each of the at least one first channel matrix corresponds to a channel from an antenna port in one polarization direction of one instance of a downlink channel to a second antenna array, the polarization direction is a polarization direction of the first antenna array, and the second antenna array is an antenna array for the terminal to receive the wireless signal.

In an example, the one-dimension uniform array may be a ULA, or may also be a CPA.

For example, an expression of the first channel matrix may be $H_p(k)$, and the first channel matrix $H_p(k)$ may correspond to a channel in the p-th polarization direction of the k-th instance of the downlink channel (a channel from the network device to the terminal). The channel may be a channel from the antenna port of the first antenna array to the second antenna array.

In an example, each of the at least one first channel matrix is a $N_r \times N_t$ matrix, where $N_t$ is a numerical count of antenna ports of the first antenna array in one polarization direction, and $N_r$ is a numerical count of antennas of the second antenna array. The second antenna array is an antenna array used by the terminal to receive the wireless signal.

In an implementation, the instance may be any one of:

  at least one OFDM subcarrier;
  at least one OFDM symbol;
  at least one RE;
  at least one CSI-RS resource; or
  at least one CSI-RS resource set.

In this way, the first matrix may be obtained based on any one of the above instances.

In some embodiments, the first antenna array is a two-dimension uniform array, the first matrix may include at least one second channel matrix and at least one third channel matrix, each of the at least one second channel matrix corresponds to a channel from one column of antenna ports in one polarization direction of one instance of a downlink channel to a second antenna array, each of the at least one third channel matrix corresponds to a channel from one row of antenna ports in one polarization direction of one instance of the downlink channel to the second antenna array, the polarization direction is a polarization direction of the first antenna array. Similarly, the first antenna array is an antenna array for the network device to transmit the wireless signal, and the second antenna array is an antenna array for the terminal to receive the wireless signal.

In an example, the two-dimension uniform array may be a UPA.

For example, an expression of the second channel matrix may be $H_{p,c}^{(v)}(k)$, the second channel matrix $H_{p,c}^{(v)}(k)$ corresponds to a channel from the c-th column of antenna ports in the p-th polarization direction (for example, a vertical polarization direction) of the k-th instance of the downlink channel to the second antenna array, where v indicates a vertical direction.

For another example, an expression of the third channel matrix may be $H_{p,r}^{(h)}(k)$, the third channel matrix $H_{p,r}^{(h)}(k)$ corresponds to a channel from the r-th row of antenna ports in the p-th polarization direction (for example, a horizontal polarization direction) of the k-th instance of the downlink channel to the second antenna array, where h indicates a horizontal direction.

In an example, each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array, r represents reception, t represents transmission.

Similarly, in an example, each of the at least one third channel matrix is a $N_r \times N_t^{(h)}$ matrix, where $N_t^{(h)}$ is a numerical count of antenna ports of the first antenna array in one polarization direction in a horizontal dimension.

Similarly, the instance may be any one of:

  at least one OFDM subcarrier;
  at least one OFDM symbol;
  at least one RE;
  at least one CSI-RS resource; or
  at least one CSI-RS resource set.

In this way, for the UPA, the first matrix may be obtained.

At step S2102, the terminal determines first information according to the first matrix.

In some embodiments, the first information may indicate a strength of a near field effect on a terminal, the near field effect may be a near field effect of the terminal relative to a first antenna array, and the first antenna array is an antenna array used by a network device to transmit a wireless signal to the terminal.

In some embodiments, the first information may indicate whether the terminal is in a near field region, where the near field region is a region determined based on an antenna parameter of the above first antenna array.

In some embodiments, the first information may indicate a curvature of wavefront of an electromagnetic wave received by the terminal, and the electromagnetic wave is an electromagnetic wave transmitted by the first antenna array.

In some embodiments, the first information may include wavefront curvature indicator information, and the wavefront curvature indicator information may indicate the curvature of the wavefront of the electromagnetic wave received by the terminal, and the electromagnetic wave is the electromagnetic wave transmitted by the first antenna array.

In some embodiments, the name of the first information is not limited, for example, may be "wavefront curvature indicator (WFCI)", "wavefront curvature indicator information", "near field effect indication information", "near field indication information", etc.

It should be noted that the curvature of the wavefront of the electromagnetic wave may also be called as a degree of curvature, which may be expressed by a curvature value or a curvature radius value.

In some embodiments, the terminal may determine the first information in the following manner:

At step S21, the terminal determines a second matrix according to the first matrix.

In some embodiments, the second matrix may be a covariance matrix of the first matrix.

In an implementation, the first antenna array is a one-dimension uniform array (e.g., a ULA or a CPA), and the first matrix may include at least one first channel matrix $H_p(k)$.

In an example, the second matrix may be determined according to an expression $C =$

$$\sum_k \sum_p H_p^H(k) \, H_p(k),$$

where C denotes the second matrix, $H_p(k)$ denotes the first matrix, $H_p^H(k)$ denotes conjugate transposition for the first matrix, p represents a serial number of a polarization direction of the first antenna array, and k represents a serial number of an instance of a downlink channel. For example, the first channel matrix $H_p(k)$ may correspond to a channel in the p-th polarization direction of the k-th instance of the downlink channel (a channel from the network device to the terminal).

In an example, if the first antenna array is a single-polarized antenna array, a value of p may be 1. If the first antenna array is a dual-polarized antenna array, a value of p may be 1 or 2. A value of k may be determined according to a numerical count of instances included in the downlink channel (the channel from the network device to the terminal). For example, if the downlink channel includes N instances, the value of k may be 1 to N.

In another implementation, the first antenna array is a two-dimension uniform array (e.g., a UPA), and the first matrix may include at least one second channel matrix $H_{p,c}^{(v)}(k)$ and at least one third channel matrix $H_{p,r}^{(h)}(k)$.

In an example, two second matrices $C^{(v)}$ and $C^{(h)}$ may be determined according to the following expressions:

$$C^{(v)} = \sum_k \sum_p \sum_{c=1}^{N_t^{(h)}} \left[ H_{p,c}^{(v)}(k) \right]^H H_{p,c}^{(v)}(k),$$

$$C^{(h)} = \sum_k \sum_p \sum_{r=1}^{N_t^{(v)}} \left[ H_{p,r}^{(h)}(k) \right]^H H_{p,r}^{(h)}(k),$$

where $C^{(v)}$ represents a second matrix in a vertical dimension, $H_{p,c}^{(v)}(k)$ represents the second channel matrix, the second channel matrix $H_{p,c}^{(v)}(k)$ corresponds to a channel from the c-th column of antenna ports in the p-th polarization direction (for example, the vertical polarization direction) of the k-th instance of the downlink channel to the second antenna array, $[H_{p,c}^{(v)}(k)]^H$ represents conjugate transposition for the second channel matrix, $C^{(h)}$ represents a second matrix in a horizontal dimension, $H_{p,r}^{(h)}(k)$ represents the third channel matrix, the third channel matrix $H_{p,r}^{(h)}(k)$ corresponds to a channel from the r-th row of antenna ports in the p-th polarization direction (for example, the horizontal polarization direction) of the k-th instance of the downlink channel to the second antenna array, $[H_{p,r}^{(h)}(k)]^H$ represents conjugate transposition for the third channel matrix, $N_t^{(v)}$ is a numerical count of antenna ports of the first antenna array in one polarization direction in the vertical dimension, $N_t^{(h)}$ is a numerical count of antenna ports of the first antenna array in one polarization direction in the horizontal dimension.

At step S22, the terminal determines the first information according to the second matrix.

In some embodiments, a way in which the terminal determines the first information according to the second matrix may include at least one of the following steps S221 to S223.

At step S221, the terminal performs eigenvalue decomposition (EVD) on the second matrix to obtain a third matrix.

The third matrix is a standard orthonormal basis of a signal subspace.

In some embodiments, the first antenna array is a one-dimension uniform array, and the third matrix $U_s$ may be determined according to an expression

$$C = [U_s \ \ U_n] \begin{bmatrix} \Lambda_s & \\ & \Lambda_n \end{bmatrix} \begin{bmatrix} U_s^H \\ U_n^H \end{bmatrix},$$

where C represents the second matrix, $U_s$ is the third matrix, $U_n$ represents the standard orthonormal basis of a noise subspace, an element on a principal diagonal of a diagonal matrix $\Lambda_s$ is an eigenvalue corresponding to a orthonormal basis vector of the signal subspace, an element on a principal diagonal of a diagonal matrix $\Lambda_n$ is an eigenvalue corresponding to a orthonormal basis vector of the noise subspace. $U_s^H$ is the conjugate transposition of $U_s$, $U_n^H$ is the conjugate transposition of $U_n$. Other elements beyond principal diagonals of the diagonal matrices $\Lambda_s$ and $\Lambda_n$ are 0.

In some other embodiments, the first antenna array is a two-dimension uniform array, and two third matrices $U_s^{(v)}$ and $U_s^{(h)}$ may be determined based on the two second matrices $C^{(v)}$ and $C^{(h)}$ as the following expressions:

$$C^{(v)} = \begin{bmatrix} U_s^{(v)} & U_n^{(v)} \end{bmatrix} \begin{bmatrix} \Lambda_s^{(v)} & \\ & \Lambda_n^{(v)} \end{bmatrix} \begin{bmatrix} [U_s^{(v)}]^H \\ [U_n^{(v)}]^H \end{bmatrix}$$

$$C^{(h)} = \begin{bmatrix} U_s^{(h)} & U_n^{(h)} \end{bmatrix} \begin{bmatrix} \Lambda_s^{(h)} & \\ & \Lambda_n^{(h)} \end{bmatrix} \begin{bmatrix} [U_s^{(h)}]^H \\ [U_n^{(h)}]^H \end{bmatrix}$$

where $C^{(v)}$ represents the second matrix in the first dimension (e.g., vertical direction), $U_s^{(v)}$ is the third matrix in the first dimension (e.g., vertical direction), $U_n^{(v)}$ represents the standard orthonormal basis of the noise subspace of the first dimension (e.g., vertical direction), an element on a principal diagonal of a diagonal matrix $\Lambda_s^{(v)}$ is an eigenvalue corresponding to a orthonormal basis vector of the signal subspace of the first dimension (e.g., vertical direction), an element on a principal diagonal of a diagonal matrix $\Lambda_n^{(v)}$ is an eigenvalue corresponding to a orthonormal basis vector of the noise subspace of the first dimension (e.g., vertical direction), $[U_s^{(v)}]^H$ is conjugate transposition of $U_n^{(v)}$, $[U_n^{(v)}]^H$ is conjugate transposition of $U_n^{(v)}$, $C^{(h)}$ represents the second matrix in the second dimension (e.g., horizontal direction), $U_s^{(h)}$ is the third matrix in the second dimension (e.g., horizontal direction), $U_n^{(h)}$ represents the standard orthonormal basis of the noise subspace of the second dimension (e.g., horizontal direction), an element on a principal diagonal of a diagonal matrix $\Lambda_s^{(h)}$ is an eigenvalue corresponding to a orthonormal basis vector of the signal subspace of the second dimension (e.g., horizontal direction), an element on a principal diagonal of a diagonal matrix $\Lambda_n^{(h)}$ is an eigenvalue corresponding to a orthonormal basis vector of the noise subspace of the second dimension (e.g., horizontal direction), $[U_s^{(h)}]^H$ is conjugate transposition of $U_s^{(h)}$, $[U_n^{(h)}]^H$ is conjugate transposition of $U_n^{(h)}$.

At step S222, the terminal obtains a first eigenvalue and a second eigenvalue according to the third matrix.

The first eigenvalue is a maximum eigenvalue of a fourth matrix, the second eigenvalue is a second maximum eigenvalue of the fourth matrix, and the fourth matrix is a matrix calculated according to the third matrix.

In some embodiments, the fourth matrix may be calculated based on the third matrix, and the maximum eigenvalue of the fourth matrix is determined as the first eigenvalue, and the second maximum eigenvalue of the fourth matrix is determined as the second eigenvalue.

In an implementation, the first antenna array is a one-dimension uniform array, and the fourth matrix may be calculated based on an expression $(U_{s,1}^H U_{s,1})^{-1} U_{s,1}^H U_{s,2}$.

where $U_{s,1}$ represents first $N_t$-1 rows of the third matrix $U_s$, $U_{s,2}$ represents last $N_t$-1 rows of the third matrix $U_s$, and $N_t$ is the numerical count of antenna ports of the first antenna array in one polarization direction, that is, the numerical count of columns of the first channel matrix $H_p(k)$.

In another implementation, the first antenna array is a two-dimension uniform array, and two fourth matrices may be calculated based on expressions

$$([U_{s,1}^{(v)}]^H U_{s,1}^{(v)})^{-1} [U_{s,1}^{(v)}]^H U_{s,2}^{(v)} \quad \text{and}$$

$$([U_{s,1}^{(h)}]^H U_{s,1}^{(h)})^{-1} [U_{s,1}^{(h)}]^H U_{s,2}^{(h)}, \text{ respectively;}$$

where $U_{s,1}^{(v)}$ represents first $(N_t^{(v)} - 1)$ rows of the third matrix $U_s^{(v)}$, $U_{s,2}^{(v)}$ represents last $(N_t^{(v)} - 1)$ rows of the third matrix $U_s^{(v)}$, $N_t^{(v)}$ is the numerical count of antenna ports of the first antenna array in one polarization direction in the first dimension (e.g., vertical direction), that is, the numerical count of columns of the second channel matrix $H_{p,c}^{(v)}(k)$, $U_{s,1}^{(h)}$ represents first $(N_t^{(h)} - 1)$ rows of the third matrix $U_s^{(h)}$, $U_{s,2}^{(h)}$

represents last $N_t^{(h)} - 1$ rows of the third matrix $U_s^{(h)}$, $N_t^{(h)}$ is the numerical count of antenna ports of the first antenna array in one polarization direction in the second dimension (e.g., horizontal direction), that is, the numerical count of columns of the third channel matrix $H_{p,r}^{(h)}(k)$.

At step S223, the terminal determines the first information according to the first eigenvalue and the second eigenvalue.

In some embodiments, a ratio of a modulus of the second eigenvalue to a modulus of the first eigenvalue is determined as the first information.

For example, the first information may be calculated and obtained based on an expression

$$ w = \frac{|\lambda_2|}{|\lambda_1|}, $$

where $w$ represents the first information, $\lambda_1$ represents the first eigenvalue, $\lambda_2$ represents the second eigenvalue, $|\lambda_1|$ represents the modulus of the first eigenvalue, and $|\lambda_2|$ represents the modulus of the second eigenvalue. In an example, $\lambda_1$ and $\lambda_2$ may be imaginary numbers.

In some embodiments, $\lambda_1$ and $\lambda_2$ may be the maximum eigenvalue and the second maximum eigenvalue of the above expression $(U_{s,1}^H U_{s,1})^{-1} U_{s,1}^H U_{s,2}$, respectively.

In an example, a modulus of a ratio of the second eigenvalue to the first eigenvalue may be determined as the first information.

For example, the first information may be calculated and obtained based on the expression

$$ w = |\frac{\lambda_2}{\lambda_1}|. $$

In some embodiments, the first antenna array is a one-dimension uniform array (e.g., ULA), and the first matrix may include at least one first channel matrix.

In some embodiments, the first antenna array is a two-dimension uniform array (e.g., UPA), and the above first matrix may include at least one second channel matrix and at least one third channel matrix. The terminal may determine the first dimension information based on the at least one second channel matrix, determine the second dimension information based on the at least one third channel matrix, and determine the first information based on the first dimension information and the second dimension information.

For example, based on the above step S21, the terminal may determine the second matrix C$^{(v)}$ in the vertical dimension according to the second channel matrix $H_{p,c}^{(v)}(k)$, and determine the second matrix C$^{(h)}$ in the horizontal dimension according to the third channel matrix $H_{p,r}^{(h)}(k)$. Based on the above steps S221 to S223, the first dimension information $w_1$ may be determined according to the second matrix C$^{(v)}$ in the vertical dimension, the second dimension information $w_2$ may be determined according to the second matrix C$^{(h)}$ in the horizontal dimension, and the first information may be further determined according to the first dimension information and the second dimension information.

In an implementation, the terminal may determine the first dimension information and the second dimension information as the first information;

In another implementation, the terminal may determine an average value of the first dimension information and the second dimension information as the first information;

In another implementation, the terminal may determine a maximum value among the first dimension information and the second dimension information as the first information;

In yet another implementation, the terminal may determine a minimum value among the first dimension information and the second dimension information as the first information.

In some embodiments, the first information is information determined according to the first dimension information and the second dimension information, the first dimension information is information determined according to the second channel matrix, and the second dimension information is information determined according to the third channel matrix.

In some embodiments, the first information includes any one of:

the first dimension information and the second dimension information;
the average value of the first dimension information and the second dimension information;
the maximum value among the first dimension information and the second dimension information; or
the minimum value among the first dimension information and the second dimension information.

At step S2103, the terminal device sends the first information to the network device.

In some embodiments, the network device may receive the first information. For example, the network device may receive the first information sent by the terminal. For another example, the network device may also receive the first information sent by other entities.

In some embodiments, the first information may be carried by channel state information (CSI). For example, the first information may be a part of the CSI.

In some embodiments, the terminal may report the first information via an uplink channel. The uplink channel may include at least one of a physical uplink control channel (PUCCH), a physical uplink shared channel (PUSCH), or other uplink channels. Similarly, the network device may receive the first information via the uplink channel.

In some embodiments, the terminal may send a first message, and the first message may include the first information. For example, the terminal may send the first message to the network device. In an example, the network device may receive the first message.

In an example, the first message may include at least one of a radio resource control (RRC) message, a medium-access-control control element (MAC CE), uplink control information (UCI) or other messages sent by the terminal to the network device.

At step S2104, the network device determines a strength of a near field effect on the terminal according to the first information.

In some embodiments, the strength of the near field effect may indicate whether the terminal device is in a near field region where the network device transmits an antenna array. The near field region is a region determined based on an antenna parameter of the first antenna array.

In some embodiments, the network device may determine whether the terminal is in the near field region based on the first information.

In some embodiments, the first information (e.g., WFCI) may quantitatively indicate the strength of the near field effect. For example, a terminal with a smaller WFCI (e.g., close to 0) may indicate that the terminal is in the far field region, the larger the WFCI of the terminal, the stronger the near field effect of the terminal. Similarly, the network device may determine the strength of the near field effect of the terminal based on the first information.

In an example, in a case where the WFCI is greater than or equal to a first threshold, it may be determined that the terminal is in the near field region. The first threshold may be any positive real number, such as 0.5. Similarly, in a case where the WFCI is less than the first threshold, it may be determined that the terminal is in the far field region.

Or, in a case where the WFCI is greater than the first threshold, it may be determined that the terminal is in the near field region. In a case where the WFCI is less than or equal to the first threshold, it may be determined that the terminal is in the far field region.

At step S2105, the network device determines the second information according to the first information.

In some embodiments, the second information may include a wireless transmission parameter configured by the network device for the terminal.

In some embodiments, the second information includes at least one of:

    a codebook parameter, in which the codebook parameter indicates a codebook used by the terminal; or
    a numerical count of candidate beams.

For example, if the terminal is in the near field region (equivalent to a strong near field effect of the terminal, or the WFCI is greater than or equal to the first threshold), the network device may select and configure a first codebook for the near field region. Or, if the terminal is in the near field region (equivalent to a weak near field effect of the terminal, or the WFCI is less than the first threshold), the network device may select and configure a second codebook for the far field region.

For another example, with respect to beam management, if the terminal is in the near field region, a larger numerical count of candidate beams may be configured.

In an example, corresponding adaptation may be performed according to the size of the WFCI (that is, the strength of the near field effect). For example, the larger the WFCI, the more the numerical count of candidate beams configured.

With the above method, the network device may determine the strength of the near field effect on the terminal according to the first information, and adapt the terminal according to the strength of the near field effect on the terminal, for example, select and configure a suitable codebook, configure a suitable numerical count of candidate beams, etc.

The method involved in embodiments of the present disclosure may include at least one of step S2101 to step S2105. For example, step S2103 may be implemented as an independent embodiment, step S2103+step S2104 may be implemented as an independent embodiment, step S2103+step S2105 may be implemented as an independent embodiment, step S2101+step S2102 may be implemented as an independent embodiment, step S2101+ step S2102+ step S2103 may be implemented as an independent embodiment, and step S2103+ step S2104+ step S2105 may be implemented as an independent embodiment, but is not limited thereto.

In some embodiments, step S2101 to step S2105 may be exchanged in order or performed simultaneously. For example, step S2104 and step S2105 may be exchanged in order or performed simultaneously.

In some embodiments, step S2101 to step S2105 are all optional steps. For example, step S2101, step S2102, step S2104, and step S2105 are optional steps, and one or more of these steps may be omitted or substituted in different embodiments. For another example, step S2103, step S2104, and step S2105 are optional steps, and one or more of these steps may be omitted or substituted in different embodiments.

In some embodiments, reference may be made to other optional implementations described before or after the description corresponding to FIG. 2.

With the above method, the first information is sent, the first information indicates the strength of the near field effect on the terminal, the near field effect is the near field effect of the terminal relative to the first antenna array, and the first antenna array is the antenna array used by the network device to transmit the wireless signal to the terminal. In this way, the strength of the near field effect on the terminal may be determined based on the first information.

In some embodiments, the names of information or the like are not limited to the names recorded in the embodiments. The terms such as "information", "message", "signal", "signaling", "report", "configuration", "indication", "instruction" "command", "channel", "parameter", "domain", "field", "symbol", "codeword", "codebook", "codepoint", "bit", "data", "program", and "chip" may be used interchangeably.

In some embodiments, the terms such as "codebook", "codeword" and "precoding matrix" may be used interchangeably. For example, a codebook may be a collection of one or more codewords/precoding matrices.

In some embodiments, the terms such as "uplink", "up link", "physical uplink" may be used interchangeably. The terms such as "downlink", "down link", "physical downlink" may be used interchangeably. The terms such as "side", "sidelink", "side communication", "sidelink communication", "direct", "direct link", "direct communication", "direct link communication" may be used interchangeably.

In some embodiments, the terms such as "DCI", "downlink (DL) assignment", "DL DCI", "uplink (UL) grant", "UL DCI" and the like may be used interchangeably.

In some embodiments, the terms such as "PDSCH", "DL data", "DL signal", "DL packet", "downlink data", "downlink signal", and "downlink packet" may be used interchangeably. The terms such as "physical uplink shared channel (PUSCH)", "UL data", "UL signal", "UL packet", "uplink data", "uplink signal", and "uplink packet" may be used interchangeably.

In some embodiments, terms such as "synchronization signal (SS)", "synchronization signal block (SSB)", "reference signal (RS)", "pilot", "pilot signal" and the like may be used interchangeably.

In some embodiments, the terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", and "panel" may be used interchangeably.

In some embodiments, "obtain", "acquire", "get", "receive", "transmit", "bidirectional transmission", "send and/or receive" may be interchangeable, and may be interpreted as many meanings such as receiving from other entities, obtaining from a protocol, obtaining from a higher layer, obtaining by self-processing, autonomous implementation, etc.

In some embodiments, the terms such as "send", "emit", "report", "issue", "transmit", "bidirectionally transmit", "send and/or receive" or the like may be used interchangeably.

FIG. 3A is a flowchart illustrating an information determination method according to an embodiment of the disclosure. As shown in FIG. 3A, embodiments of the disclosure relate to an information determination method. The method may be performed by a terminal and include the following steps.

At step S3101, a first matrix is obtained.

For optional implementations of step S3101, reference may be made to optional implementations of step S2101 in FIG. 2 and other related parts in the embodiments associated with FIG. 2, which are not repeated herein.

At step S3102, first information is determined according to the first matrix.

For optional implementations of step S3102, reference may be made to optional implementations of step S2102 in FIG. 2 and other related parts in the embodiments associated with FIG. 2, which are not repeated herein.

At step S3103, the first information is sent.

For optional implementations of step S3103, reference may be made to optional implementations of step S2103 in FIG. 2 and other related parts in the embodiments associated with FIG. 2, which are not repeated herein.

In some embodiments, the terminal may send the first information to the network device, but is not limited to this, or the terminal may also send the first information to other entities.

In an example, the first information may be configured to determine, by the network device, whether the terminal is in the near field region according to the first information, for its optional implementations, reference may be made to optional implementations of step S2105 in FIG. 2 and other related parts in the embodiments associated with FIG. 2, which are not repeated herein.

The method involved in embodiments of the present disclosure may include at least one of step S3101 to step S3103. For example, step S3103 may be implemented as an independent embodiment, step S3101+step S3102 may be implemented as an independent embodiment, but is not limited thereto.

In some embodiments, step S3101 to step S3103 may be exchanged in order or performed simultaneously.

In some embodiments, step S3101 to step S3103 are all optional steps. For example, step S3101, and step S3102 are optional steps, and one or more of these steps may be omitted or substituted in different embodiments.

FIG. 3B is a flowchart illustrating an information determination method according to an embodiment of the disclosure. As shown in FIG. 3B, embodiments of the disclosure relate to an information determination method. The method may be performed by a terminal and include the following steps.

At step S3201, a first matrix is obtained.

For optional implementations of step S3201, reference may be made to optional implementations of step S2101 in FIG. 2 and step S3101 in FIG. 3A, and other related parts in the embodiments associated with FIG. 2 and FIG. 3A, which are not repeated herein.

At step S3202, first information is determined according to the first matrix.

For optional implementations of step S3202, reference may be made to optional implementations of step S2102 in FIG. 2 and step S3102 in FIG. 3A, and other related parts in the embodiments associated with FIG. 2 and FIG. 3A, which are not repeated herein.

In some embodiments, the above steps are optional steps.

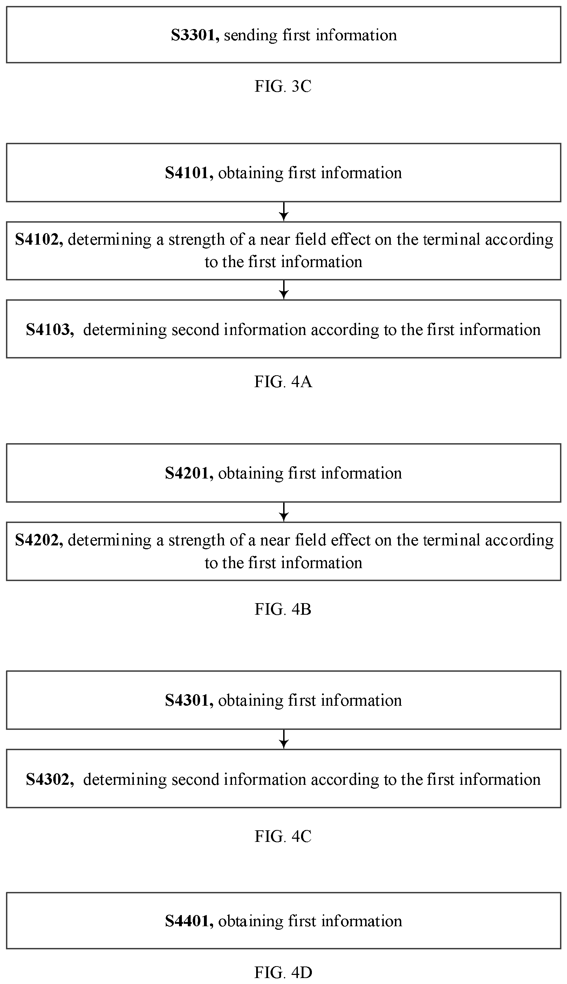

FIG. 3C is a flowchart illustrating an information determination method according to an embodiment of the disclosure. As shown in FIG. 3C, embodiments of the disclosure relate to an information determination method. The method may be performed by a terminal and include the following step.

At step S3301, first information is sent.

For optional implementations of step S3301, reference may be made to optional implementations of step S2103 in FIG. 2 and step S3103 in FIG. 3A, and other related parts in the embodiments associated with FIG. 2 and FIG. 3A, which are not repeated herein.

In some embodiments, the first information indicates a strength of a near field effect on a terminal, the near field effect is a near field effect of the terminal relative to a first antenna array, and the first antenna array is an antenna array used by a network device to transmit a wireless signal to the terminal.

In some embodiments, the method further includes: performing channel estimation according to a received reference signal to obtain a first matrix; and determining the first information according to the first matrix.

In some embodiments, the first antenna array is a one-dimension uniform array, the first matrix includes at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

In some embodiments, each of the at least one first channel matrix is a $N_r \times N_t$ matrix, where $N_t$ is a numerical count of antenna ports of the first antenna array in one polarization direction, and $N_r$ is a numerical count of antennas of the second antenna array.

In some embodiments, the first antenna array is a two-dimension uniform array, the first matrix includes at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

In some embodiments, each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and/or each of the at least one third channel matrix is a $N_r \times N_t^{(h)}$ matrix, where $N_t^{(h)}$ is a numerical count of antenna ports of the first antenna array in one polarization direction in a horizontal dimension.

In some embodiments, determining the first information according to the first matrix includes: determining first dimension information according to the at least one second channel matrix; determining second dimension information according to the at least one third channel matrix; and determining the first information according to the first dimension information and the second dimension information.

In some embodiments, determining the first information according to the first dimension information and the second dimension information includes any one of: determining the first dimension information and the second dimension information as the first information; determining an average value of the first dimension information and the second dimension information as the first information; determining a maximum value among the first dimension information and the second dimension information as the first information; or determining a minimum value among the first dimension information and the second dimension information as the first information.

In some embodiments, the instance is any one of:

at least one orthogonal frequency division multiplexing (OFDM) subcarrier;
at least one OFDM symbol;
at least one resource element (RE);
at least one channel state information reference signal (CSI-RS) resource; or
at least one CSI-RS resource set.

In some embodiments, determining the first information according to the first matrix includes: determining a second matrix according to the first matrix, in which the second matrix is a covariance matrix of the first matrix; and determining the first information according to the second matrix.

In some embodiments, determining the second matrix according to the first matrix includes:

determining the second matrix according to an expression $C = \sum_k \sum_p H_p^H(k) \, H_p(k)$ ;

where C denotes the second matrix, $H_p(k)$ denotes the first matrix, $H_p^H(k)$ denotes conjugate transposition for the first matrix, p represents a serial number of a polarization direction of the first antenna array, and k represents a serial number of an instance of a downlink channel.

In some embodiments, determining the first information according to the second matrix includes: performing eigenvalue decomposition on the second matrix to obtain a third matrix, in which the third matrix is a standard orthonormal basis of a signal subspace; obtaining a first eigenvalue and a second eigenvalue according to the third matrix, in which the first eigenvalue is a maximum eigenvalue of a fourth matrix, the second eigenvalue is a second maximum eigenvalue of the fourth matrix, and the fourth matrix is a matrix calculated according to the third matrix; and determining the first information according to the first eigenvalue and the second eigenvalue.

In some embodiments, determining the first information according to the first eigenvalue and the second eigenvalue includes: determining a ratio of a modulus of the second eigenvalue to a modulus of the first eigenvalue as the first information.

In some embodiments, the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

In some embodiments, the first information is carried via channel state information (CSI).

FIG. 4A is a flowchart illustrating an information determination method according to an embodiment of the disclosure. As shown in FIG. 4A, embodiments of the disclosure relate to an information determination method. The method may be performed by a network device and include the following steps.

At step S4101, first information is obtained.

For optional implementations of step S4101, reference may be made to optional implementations of step S2103 in FIG. 2 and other related parts in the embodiments associated with FIG. 2, which are not repeated herein.

In some embodiments, the network device may receive the first information sent by the terminal, but is not limited thereto, or the network device may receive the first information sent by other entities.

In some embodiments, the network device may obtain the first information specified by a protocol.

In some embodiments, the network device receives the first information via an upper layer(s).

In some embodiments, the network device obtains the first information via processing.

In some embodiments, step S4101 may be omitted, the network device autonomously implements the function indicated by the first information, or the above function is default or predefined.

At step S4102, a strength of a near field effect on the terminal is determined according to the first information.

For optional implementations of step S4102, reference may be made to optional implementations of step S2104 in FIG. 2 and other related parts in the embodiments associated with FIG. 2, which are not repeated herein.

At step S4103, second information is determined according to the first information.

For optional implementations of step S4103, reference may be made to optional implementations of step S2105 in FIG. 2 and other related parts in the embodiments associated with FIG. 2, which are not repeated herein.

The method involved in embodiments of the present disclosure may include at least one of step S4101 to step S4103. For example, step S4101 may be implemented as an independent embodiment, step S4101 +step S4102 may be implemented as an independent embodiment, step S4101 +step S4103 may be implemented as an independent embodiment, but is not limited thereto.

In some embodiments, step S4101 to step S4103 may be exchanged in order or performed simultaneously. For example, S4101 and step S4103 may be exchanged in order or performed simultaneously.

In some embodiments, step S4101 to step S4103 are all optional steps. For example, step S4102, and step S4103 are optional steps, and one or more of these steps may be omitted or substituted in different embodiments.

FIG. 4B is a flowchart illustrating an information determination method according to an embodiment of the disclosure. As shown in FIG. 4B, embodiments of the disclosure relate to an information determination method. The method may be performed by a network device and include the following steps.

At step S4201, first information is obtained.

For optional implementations of step S4201, reference may be made to optional implementations of step S2103 in FIG. 2 and step S4101 in FIG. 4A, and other related parts in the embodiments associated with FIG. 2 and FIG. 4A, which are not repeated herein.

At step S4202, a strength of a near field effect on the terminal is determined according to the first information.

For optional implementations of step S4202, reference may be made to optional implementations of step S2104 in FIG. 2 and step S4101 in FIG. 4A, and other related parts in the embodiments associated with FIG. 2 and FIG. 4A, which are not repeated herein.

In some embodiments, the above steps are optional steps.

FIG. 4C is a flowchart illustrating an information determination method according to an embodiment of the disclosure. As shown in FIG. 4C, embodiments of the disclosure relate to an information determination method. The method may be performed by a network device and include the following steps.

At step S4301, first information is obtained.

For optional implementations of step S4301, reference may be made to optional implementations of step S2103 in FIG. 2 and step S4101 in FIG. 4A, and other related parts in the embodiments associated with FIG. 2 and FIG. 4A, which are not repeated herein.

At step S4302, second information is determined according to the first information.

For optional implementations of step S4302, reference may be made to optional implementations of step S2105 in FIG. 2 and step S4103 in FIG. 4A, and other related parts in the embodiments associated with FIG. 2 and FIG. 4A, which are not repeated herein.

In some embodiments, the above steps are optional steps.

FIG. 4D is a flowchart illustrating an information determination method according to an embodiment of the disclosure. As shown in FIG. 4D, embodiments of the disclosure relate to an information determination method. The method may be performed by a network device and include the following step.

At step S4401, first information is obtained.

For optional implementations of step S4401, reference may be made to optional implementations of step S2103 in FIG. 2 and step S4101 in FIG. 4A, and other related parts in the embodiments associated with FIG. 2 and FIG. 4A, which are not repeated herein.

In some embodiments, the first information indicates a strength of a near field effect on a terminal, the near field effect is a near field effect of the terminal relative to a first antenna array, and the first antenna array is an antenna array used by a network device to transmit a wireless signal to the terminal.

In some embodiments, the method further includes: determining the strength of the near field effect on the terminal according to the first information.

In some embodiments, the method further includes: determining second information according to the first information, wherein the second information is a wireless transmission parameter configured by the network device for the terminal.

In some embodiments, the second information includes at least one of: a codebook parameter, in which the codebook parameter indicates a codebook used by the terminal; or a numerical count of candidate beams.

In some embodiments, the first information is information determined by the terminal based on a first matrix, and the first matrix is a matrix obtained by performing by the terminal device channel estimation according to a received reference signal.

In some embodiments, the first antenna array is a one-dimension uniform array, the first matrix includes at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

In some embodiments, each of the at least one first channel matrix is a $N_r \times N_t$ matrix, where $N_t$ is a numerical count of antenna ports of the first antenna array in one polarization direction, and $N_r$ is a numerical count of antennas of the second antenna array.

In some embodiments, the first antenna array is a two-dimension uniform array, the first matrix includes at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

In some embodiments, each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and/or each of the at least one third channel matrix is a $N_r \times N_t^{(h)}$ matrix, where $N_t^{(h)}$ is a numerical count of antenna ports of the first antenna array in one polarization direction in a horizontal dimension.

In some embodiments, the first information is information determined according to first dimension information and second dimension information, the first dimension information is information determined according to the at least one second channel matrix, and the second dimensional information is information determined according to the at least one third channel matrix.

In some embodiments, the first information includes any one of:

the first dimension information and the second dimension information;

an average value of the first dimension information and the second dimension information;

a maximum value among the first dimension information and the second dimension information; or

a minimum value among the first dimension information and the second dimension information.

In some embodiments, the instance is any one of:

at least one OFDM subcarrier;
at least one OFDM symbol;
at least one RE;
at least one CSI-RS resource; or
at least one CSI-RS resource set.

In some embodiments, the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

In some embodiments, the first information is carried via CSI.

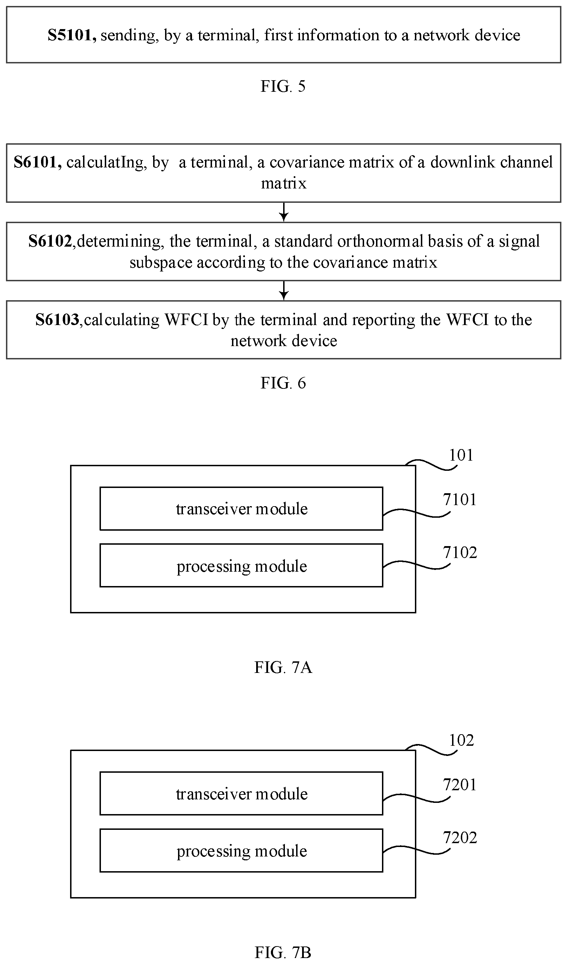

FIG. 5 is a flowchart illustrating an information determination method according to an embodiment of the disclosure. As shown in FIG. 5, embodiments of the disclosure relate to an information determination method. The method may include the following step.

At step S5101, a terminal sends first information to a network device.

For optional implementations of step S5101, reference may be made to optional implementations of step S2103 in FIG. 2, step S3103 in FIG. 3A, and step S4101 in FIG. 4A, and other related parts in the embodiments associated with FIG. 2, FIG. 3A, and FIG. 4A, which are not repeated herein.

In some embodiments, the above method may include the methods described in the embodiments related to the communication system, the terminal, the network device, etc., which are not repeated herein.

FIG. 6 is a flowchart illustrating an information determination method according to an embodiment of the disclosure. As shown in FIG. 6, embodiments of the disclosure relate to an information determination method. The method may be performed by a communication system and include the following step.

At step S6101, a terminal calculates a covariance matrix of a downlink channel matrix.

In some embodiments, the downlink channel matrix may be the first matrix in the foregoing embodiments of the present disclosure, and the covariance matrix may be the second matrix in the foregoing embodiments of the present disclosure.

For example, the terminal may calculate the covariance matrix $\mathbf{C} \in \mathbb{C}^{N_t \times N_t}$ of the downlink channel (from the network device to the terminal) matrix. An expression for calculating the covariance matrix is provided as follows:

$$\mathbf{C} = \sum_k \sum_p \mathbf{H}_p^H(k)\mathbf{H}_p(k), \qquad (1)$$

where $\mathbf{H}_p(k) \in \mathbb{C}^{N_r \times N_t}$ corresponds to a channel in the p-th polarization direction of the k-th instance of a downlink channel (a channel from the network device to the terminal). The channel may be a channel from an antenna port of a first antenna array to a second antenna array, the first antenna array is an antenna array for the network device to transmit a wireless signal, and the second antenna array is an antenna array for the terminal to receive the wireless signal.

In an example, the first antenna array may be called as a "network device antenna", "network device antenna array" or "network device transmitting antenna array". The second antenna array may be called as a "terminal antenna", "terminal antenna array" or "terminal receiving antenna array".

In some embodiments, if the network device antenna array is a one-dimension uniform array, $N_t$ is a numerical count of antenna ports in one polarization direction of the first antenna array, and $N_r$ is a numerical count of antennas of the terminal.

In some embodiments, the channel is obtained by performing, by the terminal, channel estimation based on a reference signal (such as CSI-RS, etc.) sent by the network device.

In some embodiments, the instance may be, but is not limited to, an OFDM subcarrier, an OFDM symbol, a RE, a CSI-RS resource, or a CSI-RS resource set.

At step S6102, the terminal determines a standard orthonormal basis of a signal subspace according to the covariance matrix.

In some embodiments, the standard orthonormal basis of the signal subspace may be the third matrix in the foregoing embodiments of the present disclosure.

In some embodiments, the terminal performs eigenvalue decomposition (EVD) on the covariance matrix C to obtain an orthonormal basis $U_s$ of the signal subspace.

$$\mathbf{C} = \begin{bmatrix} \mathbf{U}_s & \mathbf{U}_n \end{bmatrix} \begin{bmatrix} \mathbf{\Lambda}_s & \\ & \mathbf{\Lambda}_n \end{bmatrix} \begin{bmatrix} \mathbf{U}_s^H \\ \mathbf{U}_n^H \end{bmatrix} \qquad (2)$$

where $U_n$ is the standard orthonormal basis of a noise subspace.

Diagonal matrices $\Lambda_s$ and $\Lambda_n$ are eigenvalues corresponding to orthonormal basis vectors of the signal subspace and the noise subspace, respectively.

At step S6103, the terminal calculates WFCI and reports the WFCI to the network device.

In some embodiments, the WFCI is the first information in the foregoing embodiments of the present disclosure.

In some embodiments, an expression of the WFCI may be $w = \dfrac{|\lambda_2|}{|\lambda_1|}$,

where $\lambda_1$ and $\lambda_2$ are a maximum eigenvalue and a second maximum eigenvalue of $\left( \mathbf{U}_{s,1}^H \mathbf{U}_{s,1} \right)^{-1} \mathbf{U}_{s,1}^H \mathbf{U}_{s,2}$, respectively. $\mathbf{U}_{s,1}$ and $\mathbf{U}_{s,2}$ are submatrices formed by first $N_t$ - 1 rows and last $N_t$ - 1 rows of $\mathbf{U}_s$, respectively.

In some embodiments, the WFCI may be included as part of CSI.

In some embodiments, reporting of the WFCI may be completed via a PUCCH and/or a PUSCH.

In some embodiments, a value of the WFCI may quantitatively indicate the strength of the near field effect. For example, a terminal with a smaller WFCI, such as close to 0, means that the terminal is in a far field. The larger the WFCI of the terminal, the stronger the near field effect.

In some embodiments, if the network device antenna array is a two-dimension uniform array, then in step S6101, the terminal may obtain two covariance matrices in a vertical dimension and a horizontal dimension according to formula (1), which are respectively denoted as $\mathbf{C}^{(v)} \in \mathbb{C}^{N_t^{(v)} \times N_t^{(v)}}$ and $\mathbf{C}^{(h)} \in \mathbb{C}^{N_t^{(h)} \times N_t^{(h)}}$, respectively, where $N_t^{(v)}$ and $N_t^{(h)}$ are the numerical counts of antennas in the vertical dimension and the horizontal dimension in one polarization direction of the network device transmitting antenna array, $N_t = N_t^{(v)} N_t^{(h)}$.

$$\mathbf{C}^{(v)} = \sum_k \sum_p \sum_{c=1}^{N_t^{(h)}} \left[ \mathbf{H}_{p,c}^{(v)}(k) \right]^H \mathbf{H}_{p,c}^{(v)}(k),$$

$$\mathbf{C}^{(h)} = \sum_k \sum_p \sum_{r=1}^{N_t^{(v)}} \left[ \mathbf{H}_{p,r}^{(h)}(k) \right]^H \mathbf{H}_{p,r}^{(h)}(k),$$

$\mathbf{H}_{p,c}^{(v)}(k) \in \mathbb{C}^{N_r \times N_t^{(v)}}$ is the k-th instance of a channel matrix from the *c*-th column of antennas in the *p*-th polarization direction of the network device transmitting antenna array to the terminal receiving antenna array.

$\mathbf{H}_{p,r}^{(h)}(k) \in \mathbb{C}^{N_r \times N_t^{(h)}}$ is the k-th instance of a channel matrix from the *r*-th row of antennas in the P-th polarization direction of the network device transmitting antenna array to the terminal receiving antenna array.

For $C^{(v)}$ and $C^{(h)}$, according to the above step S6102 and step S6103, the terminal obtains the WFCIs of the vertical dimension and the horizontal dimension, which are denoted as $w^{(v)}$ and $w^{(h)}$, respectively. Then the terminal may report at least one of the following values to the network device.

$$w^{(v)}, \quad w^{(h)};$$

an average value of $w^{(v)}$ and $w^{(h)}$ is $\dfrac{w^{(v)} + w^{(h)}}{2}$;
a maximum value among $w^{(v)}$ and $w^{(h)}$ is max $\{w^{(v)}, w^{(h)}\}$; or
a minimum value among $w^{(v)}$ and $w^{(h)}$ is min $\{w^{(v)}, w^{(h)}\}$.

In some embodiments, the above network device may be a transmitting end, and the above terminal may be a receiving end.

With the above method, a method for identifying (determining) and reporting a near field terminal is implemented. The terminal reports the WCFI, and the network device may know the strength of the near field effect on the terminal, since the WCFI may represent a completeness (or curvature) of wavefront of an electromagnetic wave. In an example, the network device may also correctly and accurately adapt the terminal according to the strength of the near field effect on the terminal, for example, selecting and configuring a suitable codebook, configuring a suitable numerical count of candidate beams, etc.

In some embodiments of the present disclosure, a communication system is provided. The communication system may include a terminal and a network device. The terminal may execute the information determination method performed by the terminal in the foregoing embodiments of the present disclosure. The network device may execute the information determination method performed by the network device in the foregoing embodiments of the present disclosure.

Embodiments of the disclosure also provide an apparatus for implementing any one of the above methods. For example, an apparatus is provided, including units for performing the steps executed by the terminal in any one of the above methods. Furthermore, another apparatus is provided, including units or modules for performing the steps executed by the network device (e.g., an access network device, a core network node, a core network device, etc.) in any one of the above methods.

It should be noted that a division of units in the above apparatus is only a division of logical functions. In actual implementations, they may be fully or partially integrated into one physical entity, or may be physically separated. In addition, the units or the modules in the apparatus may be implemented in the form of software called by the processor. For example, the apparatus includes a processor, in which the processor is connected to a memory storing instructions. The processor calls the instructions stored in the memory to implement any one of the above methods or to implement functions of the units or the modules of the above apparatus. The processor is, for example, a general-purpose processor, such as a central processing unit (CPU) or a microprocessor, and the memory is a memory inside the apparatus or a memory outside the apparatus. Or, the units or the modules in the apparatus may be implemented in the form of a hardware circuit. The functions of some or all units or modules may be implemented by designing the hardware circuit. The hardware circuit may be understood as one or more processors. For example, in an implementation, the hardware circuit is an application specific integrated circuit (ASIC). The functions of some or all units or modules are implemented by designing logical relationships of components within the circuit. In another implementation, the hardware circuit may be implemented by a programmable logic device (PLD). Taking a field-programmable gate array (FPGA) as an example, it may include a large number of logic gate circuits. The connection relationships between the logic gate circuits are configured via profiles to implement the functions of some or all units or modules. All units or modules of the above apparatus may be fully implemented in the form of software called by the processor, or fully implemented in the form of the hardware circuit, or partially implemented in the form of software called by the processor and partially implemented in the form of the hardware circuit.

In embodiments of the disclosure, the processor is a circuit with a signal processing capability. In an implementation, the processor may be a circuit with a capability to read and run instructions, such as a CPU, a microprocessor, a graphics processing unit (GPU) (which may be understood as a type of the microprocessor), a digital signal processor (DSP), etc. In another implementation, the processor may implement functions via a logical relationship of hardware circuits. The logical relationship of the hardware circuit is fixed or reconstructed, for example, a hardware circuit implemented by the ASIC or the PLD, such as the FPGA. In the reconstructed hardware circuit, a process that the processor loads the profiles to implement a hardware circuit configuration may be understood as a process that the processor loads the instructions to implement the functions of some or all units. Furthermore, it may also be a hardware circuit designed for artificial intelligence, which may be understood as a type of ASIC, such as a neural network processing unit (NPU), a tensor processing unit (TPU), a deep learning processing unit (DPU), etc.

FIG. 7A is a block diagram illustrating a terminal according to an embodiment of the disclosure. As shown in FIG. 7A, the terminal includes at least one of a transceiver module 7101 or a processing module 7102. In some embodiments, the transceiver module 7101 is configured to send first information, in which the first information indicates a strength of a near field effect on the terminal, the near field effect is a near field effect of the terminal relative to a first antenna array, and the first antenna array is an antenna array used by a network device to transmit a wireless signal to the terminal. In an example, the transceiver module 7101 is configured to perform at least one of the communication steps (e.g., step S2103, but is not limited thereto), such as sending and/or receiving steps, performed by the terminal 101 in any of the above methods, which is not repeated herein. In an example, the processing module 7102 is configured to perform at least one of other steps (e.g., step S2101, step S2102, step S2104 and step S2105, but is not limited thereto) performed by the terminal 101 in any of the above methods, which is not repeated herein.

FIG. 7B is a block diagram illustrating a network device according to an embodiment of the disclosure. As shown in FIG. 7B, the network device includes at least one of a transceiver module 7201 or a processing module 7202. In some embodiments, the transceiver module 7201 is configured to receive first information, in which the first information indicates a strength of a near field effect on a terminal, the near field effect is a near field effect of the terminal relative to a first antenna array, and the first antenna array is an antenna array used by the network device to transmit a wireless signal to the terminal. In an example, the transceiver module 7201 is configured to perform at least one of the communication steps (e.g., step S2103, but is not limited thereto), such as sending and/or receiving steps, performed by the terminal 101 in any of the above methods, which is not repeated herein. In an example, the processing module 7202 is configured to perform at least one of other steps (e.g., step S2101, step S2102, step S2104 and step S2105, but is not limited thereto) performed by the terminal 101 in any of the above methods, which is not repeated herein.

In some embodiments, the transceiver module may include a sending module and/or a receiving module. The sending module and the receiving module may be separate or may be integrated. In an example, the transceiver module may be interchangeable with a transceiver.

In some embodiments, the processing module may be a single module, or may include a plurality of submodules. In an example, the plurality of sub-modules may perform all or part of the steps required to be performed by the processing module, respectively. In an example, the processing module may be interchangeable with a processor.

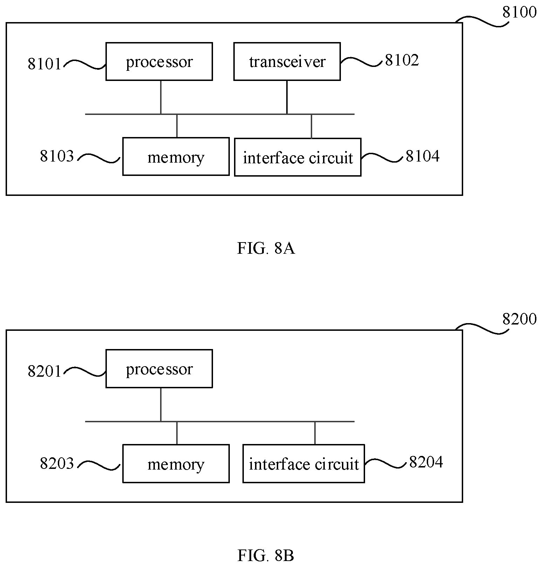

FIG. 8A is a block diagram illustrating a communication device 8100 according to an embodiment of the disclosure. The communication device 8100 may be a network device (e.g., an access network device, a core network device, etc.), or a terminal (such as a UE, etc.), or a chip, a chip system, a processor, etc. that supports the network device to implement any one of the methods, or a chip, a chip system, a processor, etc. that supports the terminal to implement any one of the methods. The communication device 8100 may be configured to implement the method in the above method embodiments. For details, reference may be made to the description in the above method embodiments.

As shown in FIG. 8A, the communication device 8100 may include one or more processors 8101. The processor 8101 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute programs, and process program data. In an example, the communication device 8100 may be configured to perform any one of the above methods. In an example, the one or more processors 8101 are configured to invoke instructions to cause the communication device 8100 to perform any one of the above methods.

In some embodiments, the communication device 8100 further includes one or more transceivers 8102. When the communication device 8100 includes one or more transceivers 8102, the transceiver 8102 performs at least one of the communication steps (e.g., S2101, S2103, and S2105, but is not limited herein) such as sending and/or receiving in the above method, and the processor 8101 performs at least one of other steps (e.g., S2102, and S2104, but is not limited herein).

In some embodiments, the transceiver may include a receiver and a transmitter, which may be separate or integrated together. In an example, the terms such as transceiver, transceiver unit, transceiving circuit, etc. may be used interchangeably; the terms such as transmitter, transmission unit, transmitting circuit, etc. may be used interchangeably; and the terms such as receiver, reception unit, receiving circuit, etc. may be used interchangeably.

In an example, the communication device 8100 further includes one or more memories 8103 for storing instructions. In an example, all or some of the memories 8103 may also be located outside the communication device 8100. In optional embodiments, the communication device 8100 further includes one or more interface circuits 8104. In an example, the interface circuit 8104 is connected to the memory 8102. The interface circuit 8104 may be configured to receive signals from the memory 8102 or other devices, and may be configured to send signals to the memory 8102 or other devices. For example, the interface circuit 8104 may read instructions stored in the memory 8102 and send the instructions to the processor 8101.

The communication device 8100 in the above embodiments may be a network device or a terminal, but a scope of the communication device 8100 in the disclosure is not limited to this, and a structure of the communication device 8100 may not be limited by FIG. 8A. The communication device may be an independent device or a part of a larger device. For example, the communication device may be: 1) an independent IC, or a chip, or a chip system or a subsystem; 2) a collection including one or more IC, In an example, the IC collection may also include storage components for storing data and computer programs; 3) an ASIC, such as a modem; 4) modules embedded in other devices; 5) a receiver, a terminal, an intelligent terminal, a cellular phone, a wireless device, a handheld phone, a mobile unit, a vehicle-mounted device, a network device, a cloud device, an artificial intelligence device, etc.; 6) others.

FIG. 8B is a block diagram illustrating a chip 8200 according to an embodiment of the disclosure. For a case where the communication device 8100 may be a chip or a chip system, reference may be made to the block diagram of the chip 8200 shown in FIG. 8B, but not limited to this.

The chip 8200 includes one or more processors 8201. The chip 8200 is configured to execute any one of the above methods.

In some embodiments, the chip 8200 further includes one or more interface circuits 8204. In an example, terms such as interface circuit, interface, transceiver pin, transceiver, etc. may be used interchangeably. In some embodiments, the chip 8200 further includes one or more memories 8203 for storing instructions. In an example, all or some of the memories 8203 may be located outside the chip 8200.

In an example, the interface circuit 8204 is connected to the one or more memories 8203. The interface circuit 8204 may be configured to receive signals from the memory 8203 or other devices, and may be configured to send signals to the memory 8203 or other devices. For example, the interface circuit 8204 may read the instructions stored in the memory 8203 and send the instructions to the processor 8201.

In some embodiments, the interface circuit 8204 performs at least one of the communication steps such as sending and/or receiving in the above method (e.g., step S2103, but not limited herein). The interface circuit 8204 performing communication step such as sending and/or receiving in the above method refers to, for example, the interface circuit 8204 performing data interaction among the processor 8201, the chip 8200, the memory 8203, or a transceiver device. In some embodiments, the processor 8201 may perform at least one of other steps (e.g., step S2101, step S2102, step S2104, and step S2105, but not limited herein).

In various embodiments of virtual devices, physical devices, chips, and the like, the modules and/or components described may be arbitrarily combined or separated as required. In an example, some or all steps may also be executed collaboratively by multiple modules and/or components, and no specific limitations are imposed herein.

The disclosure also provides a storage medium for storing instructions. When the instructions are running on the communication device 8100, the communication device 8100 is caused to implement any one of the above methods. In an example, the above storage medium is an electronic storage medium. In an example, the above storage medium is a computer-readable storage medium, which is not limited to this, and the above storage medium may also be a storage medium readable by other devices. In an example, the above storage medium may be a non-transitory storage medium, which is not limited to this, and the above storage medium may also be a transitory storage medium.

The disclosure also provides a program product. When the program product is executed by the communication device 8100, the communication device 8100 is caused to implement any one of the above methods. In an example, the above program product is a computer program product.

The disclosure also provides a computer program. When the computer program is running on a computer, the computer is caused to implement any one of the above methods.

## Claims

1. An information determination method, comprising:
sending first information, wherein the first information indicates a strength of a near field effect on a terminal, the near field effect is a near field effect of the terminal relative to a first antenna array, and the first antenna array is an antenna array used by a network device to transmit a wireless signal to the terminal.

2. The method according to claim 1, further comprising:

   performing channel estimation according to a received reference signal to obtain a first matrix; and
   determining the first information according to the first matrix.

3. The method according to claim 2, wherein the first antenna array is a one-dimension uniform array, the first matrix comprises at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

4. The method according to claim 3, wherein each of the at least one first channel matrix is a $N_r \times N_t$ matrix, where $N_t$ is a numerical count of antenna ports of the first antenna array in one polarization direction, and $N_r$ is a numerical count of antennas of the second antenna array.

5. The method according to claim 2, wherein the first antenna array is a two-dimension uniform array, the first matrix comprises at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

6. The method according to claim 5, wherein

   each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and
   each of the at least one third channel matrix is a $N_r \times N_t^{(h)}$ matrix, where $N_t^{(h)}$ is a numerical count of antenna ports of the first antenna array in one polarization direction in a horizontal dimension.

7. The method according to claim 5 or 6, wherein determining the first information according to the first matrix comprises:

   determining first dimension information according to the at least one second channel matrix;
   determining second dimension information according to the at least one third channel matrix; and
   determining the first information according to the first dimension information and the second dimension information.

8. The method according to claim 7, wherein determining the first information according to the first dimension information and the second dimension information comprises any one of:

determining the first dimension information and the second dimension information as the first information;
determining an average value of the first dimension information and the second dimension information as the first information;
determining a maximum value among the first dimension information and the second dimension information as the first information; or
determining a minimum value among the first dimension information and the second dimension information as the first information.

9. The method according to any one of claims 5 to 8, wherein the instance is any one of:

at least one orthogonal frequency division multiplexing (OFDM) subcarrier;
at least one OFDM symbol;
at least one resource element (RE);
at least one channel state information reference signal (CSI-RS) resource; or
at least one CSI-RS resource set.

10. The method according to any one of claims 2 to 6, wherein determining the first information according to the first matrix comprises:

determining a second matrix according to the first matrix, wherein the second matrix is a covariance matrix of the first matrix; and
determining the first information according to the second matrix.

11. The method according to claim 10, wherein determining the second matrix according to the first matrix comprises:

determining the second matrix according to an expression $C = \sum_k \sum_p H_p^H(k)\, H_p(k)$;
where C denotes the second matrix, $H_p(k)$ denotes the first matrix, $H_p^H(k)$ denotes conjugate transposition for the first matrix, p represents a serial number of a polarization direction of the first antenna array, and k represents a serial number of an instance of a downlink channel.

12. The method according to claim 10 or 11, wherein determining the first information according to the second matrix comprises:

performing eigenvalue decomposition on the second matrix to obtain a third matrix, wherein the third matrix is a standard orthonormal basis of a signal subspace;
obtaining a first eigenvalue and a second eigenvalue according to the third matrix, wherein the first eigenvalue is a maximum eigenvalue of a fourth matrix, the second eigenvalue is a second maximum eigenvalue of the fourth matrix, and the fourth matrix is a matrix calculated according to the third matrix; and
determining the first information according to the first eigenvalue and the second eigenvalue.

13. The method according to claim 12, wherein determining the first information according to the first eigenvalue and the second eigenvalue comprises:
determining a ratio of a modulus of the second eigenvalue to a modulus of the first eigenvalue as the first information.

14. The method according to claim 1, wherein the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

15. The method according to any one of claims 1 to 14, wherein the first information is carried via channel state information (CSI).

16. An information determination method, comprising:
receiving first information, wherein the first information indicates a strength of a near field effect on a terminal, the near field effect is a near field effect of the terminal relative to a first antenna array, and the first antenna array is an antenna array used by a network device to transmit a wireless signal to the terminal.

17. The method according to claim 16, further comprising:
determining the strength of the near field effect on the terminal according to the first information.

18. The method according to claim 16, further comprising:
determining second information according to the first information, wherein the second information is a wireless transmission parameter configured by the network device for the terminal.

19. The method according to claim 18, wherein the second information comprises at least one of:

a codebook parameter, wherein the codebook parameter indicates a codebook used by the terminal; or

a numerical count of candidate beams.

20. The method according to claim 16, wherein the first information is information determined by the terminal based on a first matrix, and the first matrix is a matrix obtained by performing by the terminal device channel estimation according to a received reference signal.

21. The method according to claim 20, wherein the first antenna array is a one-dimension uniform array, the first matrix comprises at least one first channel matrix, each of the at least one first channel matrix corresponds to a channel from an antenna port in one polarization direction of an instance of a downlink channel to a second antenna array, said polarization direction is a polarization direction of the first antenna array, and the second antenna array is an antenna array for the terminal to receive the wireless signal.

22. The method according to claim 21, wherein each of the at least one first channel matrix is a $N_r \times N_t$ matrix, where $N_t$ is a numerical count of antenna ports of the first antenna array in one polarization direction, and $N_r$ is a numerical count of antennas of the second antenna array.

23. The method according to claim 20, wherein the first antenna array is a two-dimension uniform array, the first matrix comprises at least one second channel matrix and at least one third channel matrix, each of the at least one second channel matrix corresponds to a channel from a column of antenna ports in one polarization direction of an instance of a downlink channel to a second antenna array, each of the at least one third channel matrix corresponds to a channel from a row of antenna ports in one polarization direction of an instance of the downlink channel to the second antenna array, said polarization direction is a polarization direction of the first antenna array, and the second antenna array is an antenna array for the terminal to receive the wireless signal.

24. The method according to claim 23, wherein

each of the at least one second channel matrix is a $N_r \times N_t^{(v)}$ matrix, where $N_t^{(v)}$ is a numerical count of antenna ports of the first antenna array in one polarization direction in a vertical dimension, $N_r$ is a numerical count of antennas of the second antenna array; and/or each of the at least one third channel matrix is a $N_r \times N_t^{(h)}$ matrix, where $N_t^{(h)}$ is a numerical count of antenna ports of the first antenna array in one polarization direction in a horizontal dimension.

25. The method according to claim 23 or 24, wherein the first information is information determined according to first dimension information and second dimension information, the first dimension information is information determined according to the at least one second channel matrix, and the second dimensional information is information determined according to the at least one third channel matrix.

26. The method according to claim 25, wherein the first information comprises any one of:

the first dimension information and the second dimension information;
an average value of the first dimension information and the second dimension information;
a maximum value among the first dimension information and the second dimension information; or
a minimum value among the first dimension information and the second dimension information.

27. The method according to any one of claims 21 to 26, wherein the instance is any one of:

at least one orthogonal frequency division multiplexing (OFDM) subcarrier;
at least one OFDM symbol;
at least one resource element (RE);
at least one channel state information reference signal (CSI-RS) resource; or
at least one CSI-RS resource set.

28. The method according to claim 16, wherein the first information is wavefront curvature indicator information, and the wavefront curvature indicator information indicates a curvature of wavefront of an electromagnetic wave received by the terminal, and the electromagnetic wave is an electromagnetic wave transmitted by the first antenna array.

29. The method according to any one of claims 16 to 26, wherein the first information is carried via channel state information (CSI).

30. An information determination method, comprising: sending, by a terminal, first information to a network device, wherein the first information indicates a strength of a near field effect on the terminal, the near field effect is a near field effect of the terminal relative to a first antenna array, and the first antenna array is an antenna array used by the network device to transmit a wireless signal to the terminal.

31. A terminal, comprising:

a transceiver module, configured to send first information, wherein the first information indicates a strength of a near field effect on the terminal, the near field effect is a near field effect of the terminal relative to a first antenna array, and the first antenna array is an antenna array used by a network device to transmit a wireless signal to the terminal.

32. A network device, comprising:
a transceiver module, configured to receive first information, wherein the first information indicates a strength of a near field effect on a terminal, the near field effect is a near field effect of the terminal relative to a first antenna array, and the first antenna array is an antenna array used by the network device to transmit a wireless signal to the terminal.

33. A communication device, comprising:

one or more processors;
wherein the communication device is used to perform the information determination method according to any one of claims 1 to 15 or any one of claims 16 to 29.

34. A storage medium storing instructions that, when executed on a communication device, cause the communication device to implement the information determination method according to any one of claims 1 to 15, or any one of claims 16 to 29.

35. A communication system, comprising a terminal and a network device, wherein the terminal is configured to implement the information determination method according to any one of claims 1 to 15, and the network device is configured to implement the information determination method according to any one of claims 16 to 29.

FIG. 1A

FIG. 1B

FIG. 1C

FIG. 1D

| Terminal 101 | | Network device 102 |
|---|---|---|

S2101, obtaining a first matrix

S2102, determining first information according to the first matrix

S2103, sending first information →

S2104, determining a strength of a near field effect on the terminal according to the first information

S2105, determining second information according to the first information

FIG. 2

S3101, obtaining a first matrix

↓

S3102, determining first information according to the first matrix

↓

S3103, sending first information

FIG. 3A

S3201, obtaining a first matrix

↓

S3202, determining first information according to the first matrix

FIG. 3B

---

**S3301,** sending first information

---

FIG. 3C

---

**S4101,** obtaining first information

---

**S4102,** determining a strength of a near field effect on the terminal according to the first information

---

**S4103,** determining second information according to the first information

---

FIG. 4A

---

**S4201,** obtaining first information

---

**S4202,** determining a strength of a near field effect on the terminal according to the first information

---

FIG. 4B

---

**S4301,** obtaining first information

---

**S4302,** determining second information according to the first information

---

FIG. 4C

---

**S4401,** obtaining first information

---

FIG. 4D

**S5101,** sending, by a terminal, first information to a network device

FIG. 5

**S6101,** calculatIng, by a terminal, a covariance matrix of a downlink channel matrix

**S6102,**determining, the terminal, a standard orthonormal basis of a signal subspace according to the covariance matrix

**S6103,**calculating WFCI by the terminal and reporting the WFCI to the network device

FIG. 6

101

transceiver module — 7101

processing module — 7102

FIG. 7A

102

transceiver module — 7201

processing module — 7202

FIG. 7B

8100

8101 — processor  transceiver — 8102

8103 — memory  interface circuit — 8104

FIG. 8A

8200

8201 — processor

8203 — memory  interface circuit — 8204

FIG. 8B

## INTERNATIONAL SEARCH REPORT

| | International application No. |
|---|---|
| | **PCT/CN2023/116858** |

### A. CLASSIFICATION OF SUBJECT MATTER

H04B 17/309(2015.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

3GPP, CNTXT, ENTXT, ENTXTC, CNKI, IEEE: 信息, 信号, 标识, 标示, 表示, 携带, 指示, 近场, 效应, 辐射, 干扰, 强弱, 大小, 值, 范围, 天线, 阵列, 码本, 信道, 噪声, 终端; information, signal, identification, indicate, representation, carrying, nearfield, effect, radiation, interference, strength, value, range, antenna, array, codebook, UE, BS, CSI, PMI

### C. DOCUMENTS CONSIDERED TO BE RELEVANT

| Category* | Citation of document, with indication, where appropriate, of the relevant passages | Relevant to claim No. |
|---|---|---|
| A | WO 2023092361 A1 (NTT DOCOMO, INC.) 01 June 2023 (2023-06-01) description, page 5, line 29-page 20, line 6 | 1-35 |
| A | CN 106936465 A (APPLE INC.) 07 July 2017 (2017-07-07) entire document | 1-35 |
| A | CN 115460621 A (NOKIA TECHNOLOGIES OY) 09 December 2022 (2022-12-09) entire document | 1-35 |
| A | CN 115968535 A (QUALCOMM INC.) 14 April 2023 (2023-04-14) entire document | 1-35 |
| A | CUI, Mingyao et al. "Channel Estimation for Extremely Large-Scale MIMO: Far-Field or Near-Field?" *IEEE Transactions on Communications*, Vol. 70, No. 4, 30 April 2022 (2022-04-30), entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 May 2024** | **17 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/116858**

| Patent document cited in search report | | | Publication date (day/month/year) | Patent family member(s) | | | Publication date (day/month/year) |
|---|---|---|---|---|---|---|---|
| WO | 2023092361 | A1 | 01 June 2023 | None | | | |
| CN | 106936465 | A | 07 July 2017 | KR | 20170077787 | A | 06 July 2017 |
| | | | | EP | 3188369 | A1 | 05 July 2017 |
| | | | | KR | 20190126032 | A | 08 November 2019 |
| | | | | US | 2017187412 | A1 | 29 June 2017 |
| CN | 115460621 | A | 09 December 2022 | US | 2022394502 | A1 | 08 December 2022 |
| | | | | EP | 4102897 | A1 | 14 December 2022 |
| CN | 115968535 | A | 14 April 2023 | US | 2022022142 | A1 | 20 January 2022 |
| | | | | WO | 2022015486 | A1 | 20 January 2022 |
| | | | | EP | 4183068 | A1 | 24 May 2023 |